# EUROPEAN PATENT APPLICATION

(11) **EP 3 567 957 A1**
(43) Date of publication of application: **13.11.2019**
(21) Application number: 18767844.6
(22) Date of filing: 13.03.2018
(51) Int. Cl.: H04W 72/04

(54) **INFORMATION TRANSMISSION METHOD AND APPARATUS**

(30) Priority: 13.03.2017 CN 201710147501
(71) Applicant: Huawei Technologies Co., Ltd., Longgang District Shenzhen, Guangdong 518129 (CN)
(72) Inventor: LI, Yuan, Shenzhen Guangdong 518129 (CN); GUAN, Lei, Shenzhen Guangdong 518129 (CN)
(74) Representative: Maiwald Patent- und Rechtsanwaltsgesellschaft mbH
(86) International application number: PCT/CN2018/078853
(87) International publication number: WO 2018/166447

(57) **Abstract**

An information transmission method and apparatus are provided. The method includes: determining, by a terminal device, a grant-free uplink GUL radio resource, where the GUL radio resource is used by the terminal device to send uplink data, and the GUL radio resource includes at least one time unit; and sending, by the terminal device in a first time unit in the at least one time unit, first feedback information for downlink transmission. Therefore, a feedback delay for downlink data can be effectively reduced.

## Description

This application claims priority to Chinese Patent Application No. 201710147501.6, filed with the Chinese Patent Office on March 13, 2017 and entitled "TRANSMISSION INFORMATION METHOD AND APPARATUS", which is incorporated herein by reference in its entirety.

### TECHNICAL FIELD

Embodiments of this application relate to the communications field, and more specifically, to a transmission information method and apparatus.

### BACKGROUND

To improve spectrum utilization, in an existing wireless communications system, data may be carried in an unlicensed band. Before transmitting data in the unlicensed band, a communications device (for example, a terminal device or a network device) needs to listen on a channel. After listening and detecting that the channel is idle, the communications device may continuously occupy the channel. In other words, the communications device may transmit data in consecutive transmission time intervals (Transmission Time Interval, TTI). For downlink transmission, the consecutive TTIs may be referred to as a downlink burst, and for uplink transmission, the consecutive TTIs may be referred to as an uplink burst.

Currently, a scheduling-based transmission mechanism of uplink feedback information (for example, downlink hybrid automatic repeat request acknowledgement information) for downlink data is known. In the prior art, the uplink feedback information may be sent earliest in the fourth transmission time interval (Transmission Time Interval, TTI) after a TTI of the downlink data corresponding to the uplink feedback information. For the downlink data, if uplink transmission (for example, a physical uplink control channel (Physical Uplink Control Channel, PUCCH)) that is based on scheduling performed by a base station and that immediately follows a downlink burst has a relatively short transmission time, for uplink feedback information carried in a later TTI in the downlink burst, the terminal device may be unable to send the uplink feedback information in the uplink transmission, but needs to wait to send the uplink feedback information in uplink transmission that is scheduled or triggered in a next downlink burst. In addition, if the terminal device fails to listen on a channel, the terminal device cannot occupy a scheduled physical uplink shared channel (Physical Uplink Shared Channel, PUSCH), so that the terminal device cannot carry the uplink feedback information in the PUSCH. Further, the terminal device also needs to wait to send the uplink feedback information in the uplink transmission that is scheduled or triggered in the next downlink burst.

In this way, the channel cannot be preempted due to a relatively short uplink transmission time and a listening failure of the terminal device, and as a result, some uplink feedback information cannot be sent in a relatively short time, increasing a feedback delay for the downlink data.

### SUMMARY

Embodiments of this application provide an information transmission method and apparatus, to effectively reduce a feedback delay for downlink data.

According to a first aspect, an information transmission method is provided. A terminal device determines a grant-free uplink GUL radio resource, where the GUL radio resource is used by the terminal device to send uplink data, and the GUL radio resource includes at least one time unit; and
the terminal device sends, in a first time unit in the at least one time unit, first feedback information for downlink transmission.

Therefore, according to the information transmission method provided in the embodiments of this application, the terminal device can send the first feedback information for the downlink transmission on the GUL radio resource allocated by a network device, to be specific, carry the first feedback information in a GUL PUSCH without waiting for a PUSCH or an (e)PUCCH scheduled or triggered by next downlink transmission, thereby reducing a delay of the first feedback information and improving downlink transmission adaptation precision.

With reference to the first aspect, in a first implementation of the first aspect, the first time unit and a second time unit in the at least one time unit are a same time unit, or a time domain location of the first time unit is after a time domain location of the second time unit in the at least one time unit, the second time unit is a time unit in which the terminal device sends grant-free uplink control information G-UCI, and the G-UCI includes scheduling information for uplink transmission.

In this way, by using a time sequence relationship between the first time unit and the second time unit, the network device can determine the first time unit based on the G-UCI. In addition, the network device always needs to detect the G-UCI, and therefore, complexity of blindly detecting the first feedback information by the network device is also reduced.

With reference to the first aspect, in a second implementation of the first aspect, when the first time unit and the second time unit are the same time unit, the first feedback information and the G-UCI are independently encoded.

In this way, the first feedback information and the G-UCI are independently encoded, so that information related to the first feedback information can be put in the G-UCI, and the network device can obtain the first feedback information based on the information related to the first feedback information after obtaining the G-UCI, thereby effectively reducing the complexity of blind detection.

With reference to the first aspect, in a third implementation of the first aspect, when the time domain location of the first time unit is after the time domain location of the second time unit, a time sequence relationship between the first time unit and the second time unit is predefined.

In this way, the first time unit is determined by using the predefined time sequence relationship between the first time unit and the second time unit, so that the terminal device does not need to send signaling to notify the time domain location of the first time unit. In this way, signaling overheads are effectively reduced, and the complexity of blind detection of the network device is also reduced.

With reference to the first aspect, in a fourth implementation of the first aspect, the G-UCI is further configured to indicate the time domain location of the first time unit in the at least one time unit.

In this way, the time domain location of the first time unit in the at least one time unit is indicated by using the G-UCI, effectively reducing the complexity of blind detection of the network device, and the time domain location is dynamically indicated by using the G-UCI, also improving system flexibility.

With reference to the first aspect, in a fifth implementation of the first aspect, the G-UCI is further configured to instruct the terminal device to send the first feedback information.

In this way, the G-UCI instructs the terminal device to send the first feedback information, so that the network device can learn of existence of the first feedback information in time, and the complexity of blind detection of the network device is reduced. In addition, when the first feedback information and the uplink data are multiplexed in a same time unit through rate matching, the network device can correctly demodulate the first feedback information and the uplink data that are carried in the same time unit, thereby improving uplink transmission efficiency.

With reference to the first aspect, in a sixth implementation of the first aspect, the G-UCI is further used to indicate a transport format of the first feedback information.

In this way, the transport format of the first feedback information is indicated by using the G-UCI, so that flexibility of sending the first feedback information is improved, and the network device can correctly receive the first feedback information by using the transport format of the first feedback information, and can also effectively determine a physical resource of uplink data that occupies a time unit the same as that of the first feedback information, so as to demodulate the uplink data.

With reference to the first aspect, in a seventh implementation of the first aspect, the first time unit is a last time unit or a penultimate time unit in the at least one time unit.

In this way, the first time unit is located in the last time unit or the penultimate time unit in the at least one time unit, feedback information #1 corresponding to a relatively large amount of different downlink data can be carried in the first time unit, thereby effectively reducing a feedback delay. In addition, the terminal device does not need to send signaling to notify the time domain location of the first time unit. In this way, signaling overheads are effectively reduced, and the complexity of blind detection of the network device is also reduced.

With reference to the first aspect, in an eighth implementation of the first aspect, when the first feedback information includes downlink hybrid automatic repeat request acknowledgement DL HARQ-ACK information for first downlink data, a time sequence relationship between the first time unit and a third time unit is predefined, or a time sequence relationship between the first time unit and a third time unit is configured or indicated by the network device, and the third time unit is a time unit in which the network device sends the first downlink data.

In this way, the first time unit is associated with the third time unit in which the downlink data that is based on scheduling performed by the network device is located. This can improve controllability of the network device over a sending occasion of the first feedback information, and can also reduce the complexity of blind detection of the network device when the terminal device does not notify the network device of the existence of the first feedback information and the transport format of the first feedback information.

With reference to the first aspect, in a ninth implementation of the first aspect, before the terminal device sends the first feedback information in the first time unit, the method further includes:
receiving, by the terminal device, first trigger information sent by the network device, where the first trigger information is used to trigger the terminal device to carry the first feedback information in a fourth time unit, and the fourth time unit belongs to the at least one time unit; and
that the terminal device sends, in a first time unit in the at least one time unit, first feedback information for downlink transmission includes:
   sending, by the terminal device, the first feedback information in the first time unit based on the first trigger information.

In this way, the first time unit is associated with the fourth time unit that is based on scheduling performed by the network device. This can improve the controllability of the network device over the sending occasion of the first feedback information, and can also reduce the complexity of blind detection of the network device when the terminal device does not notify the network device of the existence of the first feedback information and the transport format of the first feedback information.

With reference to the first aspect, in a tenth implementation of the first aspect, before the terminal device sends the first feedback information in the first time unit, the method further includes:
receiving, by the terminal device, second trigger information sent by the network device in a fifth time unit, where the second trigger information is used to trigger the terminal device to send second feedback information in a sixth time unit, a time domain location of the sixth time unit is before the time domain location of the first time unit, and an information type of the first feedback information is at least partially the same as an information type of the second feedback information; and
that the terminal device sends, in a first time unit in the at least one time unit, first feedback information for downlink transmission includes:
   when the terminal device fails to send the second feedback information, sending, by the terminal device, the first feedback information in the first time unit.

In this way, the first time unit is associated with the fifth time unit and the sixth time unit that are based on scheduling performed by the network device. This can improve the controllability of the network device over the sending occasion of the first feedback information, and can also reduce the complexity of blind detection of the network device when the terminal device does not notify the network device of the existence of the first feedback information and the transport format of the first feedback information.

With reference to the first aspect, in an eleventh implementation of the first aspect, the fifth time unit is a time unit in which the terminal device receives latest trigger information before the first time unit.

In this way, the fifth time unit is a time unit in which the terminal device receives the latest trigger information before the first time unit, effectively improving time validity of the first feedback information.

With reference to the first aspect, in a twelfth implementation of the first aspect, the first feedback information includes at least one of aperiodic channel state information aCSI and downlink hybrid automatic repeat request acknowledgement DL HARQ-ACK information.

According to a second aspect, an information transmission method is provided. A network device allocates a grant-free uplink GUL radio resource to a terminal device, where the GUL radio resource is used by the terminal device to send uplink data, and the GUL radio resource includes at least one time unit; and
the network device receives first feedback information sent by the terminal device for downlink data, where the first feedback information is carried in a first time unit in the at least one time unit.

Therefore, according to the information transmission method provided in the embodiments of this application, the GUL radio resource is allocated to the terminal device, so that the terminal device can send, in the first time unit in the GUL radio resource, the first feedback information for the downlink transmission, to be specific, carry the first feedback information in a GUL PUSCH without waiting for a PUSCH or an (e)PUCCH scheduled or triggered by next downlink transmission, thereby reducing a delay of the first feedback information and improving downlink transmission adaptation precision.

With reference to the second aspect, in a first implementation of the second aspect, the first time unit and a second time unit in the at least one time unit are a same time unit, or a time domain location of the first time unit is after a time domain location of the second time unit in the at least one time unit, the second time unit is a time unit in which the terminal device sends grant-free uplink control information G-UCI, and the G-UCI includes scheduling information for uplink transmission.

In this way, by using a time sequence relationship between the first time unit and the second time unit, the network device can determine the first time unit based on the G-UCI. In addition, the network device always needs to detect the G-UCI, and therefore, complexity of blindly detecting the first feedback information by the network device is also reduced.

With reference to the second aspect, in a second implementation of the second aspect, when the first time unit and the second time unit are the same time unit, the first feedback information and the G-UCI are independently encoded.

In this way, the first feedback information and the G-UCI are independently encoded, so that information related to the first feedback information can be put in the G-UCI, and the network device can obtain the first feedback information based on the information related to the first feedback information after obtaining the G-UCI, thereby effectively reducing the complexity of blind detection.

With reference to the second aspect, in a third implementation of the second aspect, when the time domain location of the first time unit is after the time domain location of the second time unit, a time sequence relationship between the first time unit and the second time unit is predefined.

In this way, the first time unit is determined by using the predefined time sequence relationship between the first time unit and the second time unit, so that the terminal device does not need to send signaling to notify the time domain location of the first time unit. In this way, for the network device, the complexity of blind detection of the network device is reduced.

With reference to the second aspect, in a fourth implementation of the second aspect, the G-UCI is further configured to indicate the time domain location of the first time unit in the at least one time unit; and
that the network device receives first feedback information sent by the terminal device includes:
receiving, by the network device, the G-UCI;
determining, by the network device, the time domain location of the first time unit based on the G-UCI; and
receiving, by the network device, the first feedback information based on the time domain location of the first time unit.

In this way, the time domain location of the first time unit in the at least one time unit is determined by using the G-UCI sent by terminal device, effectively reducing the complexity of blind detection of the network device, and the time domain location is dynamically indicated by using the G-UCI, also improving system flexibility.

With reference to the second aspect, in a fifth implementation of the second aspect, the G-UCI is further configured to instruct the terminal device to send the first feedback information; and
that the network device receives first feedback information sent by the terminal device includes:
receiving, by the network device, the G-UCI; and
receiving, by the network device, the first feedback information based on the G-UCI.

In this way, the G-UCI sent by the terminal device is received, so that the network device can learn of existence of the first feedback information in time, and the complexity of blind detection of the network device is reduced. In addition, when the first feedback information and the uplink data are multiplexed in a same time unit through rate matching, the network device can correctly demodulate the first feedback information and the uplink data that are carried in the same time unit, thereby improving uplink transmission efficiency.

With reference to the second aspect, in a sixth implementation of the second aspect, the G-UCI is further used to indicate a transport format of the first feedback information; and
that the network device receives first feedback information sent by the terminal device includes:
receiving, by the network device, the G-UCI;
determining, by the network device, the transport format of the first feedback information based on the G-UCI; and
receiving, by the network device, the first feedback information based on the transport format of the first feedback information.

In this way, the transport format of the first feedback information is indicated by receiving the G-UCI sent by the terminal device, so that the network device can correctly receive the first feedback information by using the transport format of the first feedback information, improving flexibility of sending the first feedback information, and the network device can also effectively determine a physical resource of uplink data that occupies a time unit the same as that of the first feedback information, so as to demodulate the uplink data.

With reference to the second aspect, in a seventh implementation of the second aspect, the first time unit is a last time unit or a penultimate time unit in the at least one time unit.

With reference to the second aspect, in an eighth implementation of the second aspect, when the first feedback information includes downlink hybrid automatic repeat request acknowledgement DL HARQ-ACK information for first downlink data, a time sequence relationship between the first time unit and a third time unit is predefined, or a time sequence relationship between the first time unit and a third time unit is configured or indicated by the network device, and the third time unit is a time unit in which the network device sends the first downlink data.

In this way, the first time unit is associated with the third time unit in which the downlink data that is based on scheduling performed by the network device is located. This can improve controllability of the network device over a sending occasion of the first feedback information, and can also reduce the complexity of blind detection of the network device when the terminal device does not notify the network device of the existence of the first feedback information and the transport format of the first feedback information.

With reference to the second aspect, in a ninth implementation of the second aspect, before the network device receives the first feedback information sent by the terminal device, the method further includes:
sending, by the network device, first trigger information to the terminal device, where the first trigger information is used to trigger the terminal device to carry the first feedback information in a fourth time unit, and the fourth time unit belongs to the at least one time unit.

In this way, the first time unit is associated with the fourth time unit that is based on scheduling performed by the network device. This can improve the controllability of the network device over the sending occasion of the first feedback information, and can also reduce the complexity of blind detection of the network device when the terminal device does not notify the network device of the existence of the first feedback information and the transport format of the first feedback information.

With reference to the second aspect, in a tenth implementation of the second aspect, before the network device receives the first feedback information sent by the terminal device, the method further includes:
sending, by the network device, second trigger information to the terminal device in a fifth time unit, where the second trigger information is used to trigger the terminal device to send second feedback information in a sixth time unit, a time domain location of the sixth time unit is before the time domain location of the first time unit, and an information type of the first feedback information is at least partially the same as an information type of the second feedback information.

In this way, the first time unit is associated with the fifth time unit and the sixth time unit that are based on scheduling performed by the network device. This can improve the controllability of the network device over the sending occasion of the first feedback information, and can also reduce the complexity of blind detection of the network device when the terminal device does not notify the network device of the existence of the first feedback information and the transport format of the first feedback information.

With reference to the second aspect, in an eleventh implementation of the second aspect, the fifth time unit is a time unit in which the network device sends latest trigger information before the first time unit.

In this way, the fifth time unit is a time unit in which the terminal device receives the latest trigger information before the first time unit, effectively improving time validity of the first feedback information.

With reference to the second aspect, in a twelfth implementation of the second aspect, the first feedback information includes at least one of aperiodic channel state information aCSI and downlink hybrid automatic repeat request acknowledgement DL HARQ-ACK information.

According to a third aspect, an information transmission apparatus is provided. The apparatus may be configured to perform an operation of the network device in the first aspect or any possible implementation of the first aspect. Specifically, the apparatus may include a module or unit configured to perform the operation of the terminal device in the first aspect or any possible implementation of the first aspect.

According to a fourth aspect, an information transmission apparatus is provided. The apparatus may be configured to perform an operation of the network device in the second aspect or any possible implementation of the second aspect. Specifically, the apparatus may include a module or unit configured to perform the operation of the network device in the second aspect or any possible implementation of the second aspect.

According to a fifth aspect, a terminal device is provided. The terminal device includes a processor, a transceiver, and a memory. The processor, the transceiver, and the memory communicate with each other by using an inner connection path. The memory is configured to store an instruction. The processor is configured to execute the instruction stored in the memory. When the processor executes the instruction stored by the memory, the terminal device performs the method in the first aspect or any possible implementation of the first aspect, or the terminal device implements the apparatus provided in the third aspect.

According to a sixth aspect, a network device is provided. The network device includes a processor, a transceiver, and a memory. The processor, the transceiver, and the memory communicate with each other by using an inner connection path. The memory is configured to store an instruction. The processor is configured to execute the instruction stored in the memory. When the processor executes the instruction stored by the memory, the network device executes the method in the second aspect or any possible implementation of the second aspect, or the network device implements the apparatus provided in the fourth aspect.

According to a seventh aspect, a computer readable storage medium is provided and is configured to store a computer program, and the computer program includes an instruction that is used to perform the method in the first aspect or any possible implementation of the first aspect.

According to an eighth aspect, a computer readable storage medium is provided and is configured to store a computer program, and the computer program includes an instruction that is used to perform the method in the second aspect or any possible implementation of the second aspect.

In some of the above implementations, the first time unit is located in the K^{th} time unit after the second time unit, where K is an integer greater than or equal to 1.

In some of the above implementations, the first feedback information and the uplink data carried in the first time unit are multiplexed in the first time unit through rate matching.

In some of the above implementations, duration of an interval between the fifth time unit and the first time unit is less than first preset duration, or duration of an interval between the sixth time unit and the first time unit is less than second preset duration.

In some of the above implementations, the first feedback information is carried on a GUL radio resource corresponding to the first time unit.

### DESCRIPTION OF DRAWINGS

FIG. 1 is a schematic architectural diagram of a communications system of an information transmission method and apparatus applicable to an embodiment of this application;
FIG. 2 is a schematic interaction flowchart of an information transmission method according to an embodiment of this application;
FIG. 3 is a schematic diagram of distribution of a time-frequency resource for information transmission in time domain according to an embodiment of this application;
FIG. 4 shows distribution of G-UCI, feedback information #1, and data information in a GUL PUSCH according to an embodiment of this application;
FIG. 5 is a schematic diagram of a time sequence relationship between a time unit #1 and a time unit #2 according to an embodiment of this application;
FIG. 6 is a schematic diagram of a time domain location of a time unit #1 according to an embodiment of this application;
FIG. 7 shows distribution of G-UCI, feedback information #1, and data information in a GUL PUSCH according to another embodiment of this application;
FIG. 8 is a schematic diagram of a time sequence relationship between a time unit #1 and a time unit #3 according to an embodiment of this application;
FIG. 9 is a schematic diagram of a time sequence relationship between a time unit #1, a time unit #5, and a time unit #6 according to an embodiment of this application;
FIG. 10 is a schematic block diagram of an information transmission apparatus according to an embodiment of this application; and
FIG. 11 is a schematic block diagram of an information transmission apparatus according to an embodiment of this application.

### DESCRIPTION OF EMBODIMENTS

The following clearly and completely describes the technical solutions in the embodiments of this application with reference to the accompanying drawings in the embodiments of this application.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

It should be understood that, the embodiments of this application may be applied to various communications systems, for example, systems such as a global system for mobile communications (Global System for Mobile Communications, GSM) system, a wideband code division multiple access (Wideband Code Division Multiple Access, WCDMA) system, and an LTE system, and supported communication is mainly voice and data communication. Usually, a conventional base station supports a limited quantity of connections, and is easy to implement.

A next generation mobile communications system makes future mobile data traffic growth, a massive Internet of Things, diversified new services, and diversified application scenarios possible. In addition to acting as a unified connection framework, basic 5G new radio (5th Generation New Radio, 5G NR) of a new generation cellular network is expected to increase a data speed, a capacity, a delay, reliability, efficiency, and a coverage capability that are of a network to a new level, and fully use each bit of available spectrum resources. Moreover, 5G based on an orthogonal frequency division multiplexing (Orthogonal Frequency Division Multiplexing, OFDM) new radio design becomes a global standard, not only supports a 5G device and diversified deployment and covers diversified spectrums (including covering low and high bands), but also needs to support diversified services and terminals.

The embodiments of this application describe the embodiments with reference to a terminal device. The terminal device may also be referred to as user equipment (User Equipment, UE) user equipment, an access terminal, a subscriber unit, a subscriber station, a mobile station, a mobile console, a remote station, a remote terminal, a mobile device, a user terminal, a terminal, a wireless communication device, a user agent, or a user apparatus. The terminal device may be a station (STAION, ST) in a wireless local area network (Wireless Local Area Networks, WLAN), may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device and a computing device having a wireless communication function, or another processing device, an in-vehicle device, a wearable device connected to a wireless modem, a terminal device in a future 5G network, a terminal device in a future evolved PLMN network, or the like.

In addition, the embodiments of this application describe the embodiments with reference to a network device. The network device may be a device, such as a network device, configured to communicate with a mobile device. The network device may be an access point (ACCESS POINT, AP) in a WLAN or a base transceiver station (Base Transceiver Station, BTS) in GSM or code division multiple access (Code Division Multiple Access, CDMA); or may be a NodeB (NodeB, NB) in WCDMA; or may be an evolved NodeB (Evolutional NodeB, eNB or eNodeB) in LTE, or a regeneration station or an access point, or a vehicular device, a wearable device, a network device in a future 5G network, a network device in a future evolved PLMN network, or the like.

A method and an apparatus that are provided in the embodiments of this application may be applied to the terminal device or the network device. The terminal device or the network device includes a hardware layer, an operating system layer running above the hardware layer, and an application layer running above the operating system layer. The hardware layer includes hardware such as a central processing unit (Central Processing Unit, CPU), a memory management unit (Memory Management Unit, MMU), and a memory (also referred to as a main memory). The operating system may be any one or more computer operating systems that implement service processing by using a process (Process), for example, a Linux operating system, a Unix operating system, an Android operating system, an iOS operating system, or a windows operating system. The application layer includes applications such as a browser, an address book, word processing software, and instant messaging software. In addition, in the embodiments of this application, a specific structure of an entity for performing a control information transmission method is not particularly limited in the embodiments of this application, provided that the entity can run a program including code of the control information transmission method in the embodiments of this application, to perform communication according to the control information transmission method in the embodiments of this application. For example, an entity for performing a wireless communication method in the embodiments of this application may be the terminal device or the network device, or a function module that is in the terminal device or the network device and that can invoke a program and execute the program.

In addition, aspects or features in the embodiments of this application may be implemented as a method, an apparatus or a product that uses standard programming and/or engineering technologies. The term "product" used in the embodiments of this application covers a computer program that can be accessed from any computer readable component, carrier or medium. For example, the computer-readable medium may include but is not limited to a magnetic storage component (for example, a hard disk, a floppy disk, or a magnetic tape), an optical disc (for example, a compact disc (Compact Disc, CD) or a digital versatile disc (Digital Versatile Disc, DVD)), a smart card, and a flash memory component (for example, erasable programmable read-only memory (Erasable Programmable Read-Only Memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, include, and/or carry an instruction and/or data.

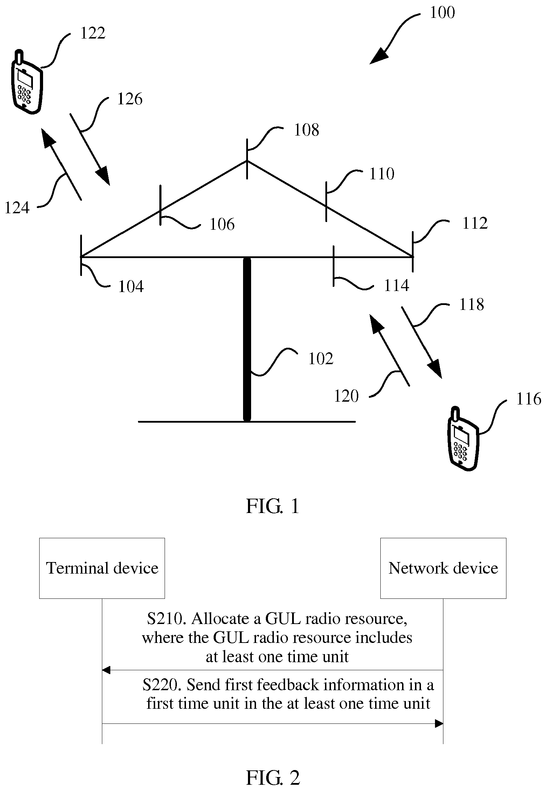

FIG. 1 is a schematic diagram of a communications system for data transmission applied to the embodiments of this application. As shown in FIG. 1, the communications system 100 includes a network device 102, and the network device 102 may include a plurality of antennas, for example, antennas 104, 106, 108, 110, 112, and 114. In addition, the network device 102 may additionally include a transmitter chain and a receiver chain. A person of ordinary skill in the art may understand that the transmitter chain and the receiver chain each may include a plurality of components (for example, a processor, a modulator, a multiplexer, a demodulator, a demultiplexer, or an antenna) related to signal sending and receiving.

The network device 102 may communicate with a plurality of terminal devices (for example, a terminal device 116 and a terminal device 122). However, it may be understood that the network device 102 may communicate with any quantity of terminal devices that are similar to the terminal device 116 or 122. The terminal devices 116 and 122 each may be, for example, a cellular phone, a smartphone, a portable computer, a handheld communications device, a handheld computing device, a satellite radio apparatus, a global positioning system, a PDA, and/or any other suitable device used for communication in the wireless communications system 100.

As shown in FIG. 1, the terminal device 116 communicates with the antennas 112 and 114. The antennas 112 and 114 send information to the terminal device 116 by using a forward link 118, and receive information from the terminal device 116 by using a reverse link 120. In addition, the terminal device 122 communicates with the antennas 104 and 106. The antennas 104 and 106 send information to the terminal device 122 by using a forward link 124, and receive information from the terminal device 122 by using a reverse link 126.

For example, in a frequency division duplex (Frequency Division Duplex, FDD) system, the forward link 118 and the reverse link 120 may use different bands, and the forward link 124 and the reverse link 126 may use different bands.

For another example, in a time division duplex (Time Division Duplex, TDD) system and a full duplex (Full Duplex) system, the forward link 118 and the reverse link 120 may use a same band, and the forward link 124 and the reverse link 126 may use a same band.

Each antenna (or an antenna group including a plurality of antennas) and/or area designed for communication is referred to as a sector of the network device 102. For example, an antenna group may be designed to communicate with a terminal device in a sector within coverage of the network device 102. In a process in which the network device 102 communicates with the terminal devices 116 and 122 respectively by using the forward links 118 and 124, transmit antennas of the network device 102 may improve signal to noise ratios of the forward links 118 and 124 through beamforming. In addition, compared with a manner in which a network device sends signals to all terminal devices by using a single antenna, when the network device 102 sends, through beamforming, signals to the terminal devices 116 and 122 that are randomly distributed in related coverage, a mobile device in a neighboring cell is less interfered.

Within a given time, the network device 102, the terminal device 116, or the terminal device 122 may be a wireless communications sending apparatus and/or a wireless communications receiving apparatus. When sending data, the wireless communications sending apparatus may encode the data for transmission.

Specifically, the wireless communications sending apparatus may obtain (for example, generate, receive from another communications apparatus, or store in a memory) a specific quantity of data bits that need to be sent to the wireless communications receiving apparatus by using a channel. The data bits may be included in a transport block (or a plurality of transport blocks) of data, and the transport block may be segmented to generate a plurality of code blocks.

In addition, the communications system 100 may be a public land mobile network (Public Land Mobile Network, PLMN), a D2D network, an M2M network, or another network. FIG. 1 is only an example of a simplified schematic diagram. The network may further include another network device not shown in FIG. 1.

In the embodiments of this application, a resource used in the communications system 100 may be a grant-free resource, or in the embodiments of this application, each communications device (for example, the network device or the terminal device) in the communications system 100 may use a resource for communication according to a grant-free transmission solution.

The following describes in detail the grant-free transmission solution in the embodiments of this application. In the embodiments of this application, the grant-free transmission may be understood as any one or more of the following meanings, or a combination of some technical features in a plurality of meanings, or other similar meanings.

The grant-free transmission may be as follows: The network device pre-allocates a plurality of transmission resources to the terminal device and notifies the terminal device of the transmission resources. When having an uplink data transmission requirement, the terminal device selects at least one transmission resource from the plurality of transmission resources pre-allocated by the network device, and sends uplink data by using the selected transmission resource; and the network device detects, on one or more transmission resources in the plurality of pre-allocated transmission resources, the uplink data sent by the terminal device. The detection may be blind detection, or may be detection performed based on a specific control field in the uplink data, or detection performed in another manner.

The grant-free transmission may be as follows: The network device pre-allocates a plurality of transmission resources to the terminal device and notifies the terminal device of the transmission resources, so that when having an uplink data transmission requirement, the terminal device selects at least one transmission resource from the plurality of transmission resources pre-allocated by the network device, and sends uplink data by using the selected transmission resource.

The grant-free transmission may be as follows: Information about a plurality of pre-allocated transmission resources is obtained; and when there is an uplink data transmission requirement, at least one transmission resource is selected from the plurality of transmission resources, and uplink data is sent by using the selected transmission resource. The information may be obtained from the network device.

The grant-free transmission may be a method in which uplink data transmission of the terminal device can be implemented without dynamic scheduling performed by the network device. The dynamic scheduling may be a scheduling manner in which the network device indicates a transmission resource for each uplink data transmission of the terminal device by using signaling. Optionally, implementing uplink data transmission of the terminal device may be understood as allowing two or more terminal devices to transmit uplink data on a same time-frequency resource. Optionally, the transmission resource may be a transmission resource in one or more transmission time units after a moment at which the terminal device receives the signaling. The transmission time unit may be a minimum time unit in which transmission is performed once, for example, a TTI, and a value of the transmission time unit may be 1 ms, 0.5 ms, or 2 symbols, or may be another preset transmission time unit.

The grant-free transmission may be as follows: The terminal device performs uplink data transmission without being granted by the network device. The grant may be as follows: The terminal device sends an uplink scheduling request to the network device; and after receiving the scheduling request, the network device sends an uplink grant to the terminal device. The uplink grant indicates an uplink transmission resource allocated to the terminal device.

The grant-free transmission may be a contention-based transmission manner. Specifically, a plurality of terminals may simultaneously transmit uplink data on a same pre-allocated time-frequency resource without being granted by a base station.

Blind detection may be understood as detection performed, when it is unknown in advance whether data arrives, on data that may arrive. Blind detection may alternatively be understood as detection performed without an explicit signaling indication.

In the embodiments of this application, the transmission resource may include but is not limited to a combination of one or more of the following resources:
α- a time domain resource (also referred to as a time resource), such as a radio frame, a subframe, and a symbol;
β- a frequency domain resource (also referred to as a spectrum resource), such as a subcarrier and a resource block;
γ- a space domain resource, such as a transmit antenna and a beam;
θ- a code domain resource, such as a sparse code multiple access (Sparse Code Multiple Access, SCMA) codebook, a low density signature (Low Density Signature, LDS) sequence, and a CDMA code; and
δ- an uplink pilot resource.

In some embodiments of this application, there may be a plurality of (two or more) terminal devices, and each terminal device autonomously selects, according to a grant-free transmission solution, a grant-free transmission resource to send uplink data to the network device.

A time-frequency resource used in the communications system 100 for wireless communication is described in detail below.

In the embodiments of this application, a time domain resource used by the network device and the terminal device to transmit information may be divided into a plurality of time units in time domain.

In addition, in this embodiment of this application, a plurality of time units may be consecutive, or preset intervals may be set between some adjacent time units. This is not specifically limited in the embodiments of this application.

In the embodiments of this application, the time unit may include a time unit used for uplink information (for example, uplink data) transmission and/or downlink information (for example, downlink data) transmission.

In the embodiments of this application, a length of the time unit may be arbitrarily set, and is not specifically limited in the embodiments of this application.

For example, one time unit may include one or more subframes.

Alternatively, one time unit may include one or more slots.

Alternatively, one time unit may include one or more symbols.

Alternatively, one time unit may include one or more TTIs.

Alternatively, one time unit may include one or more short transmission time intervals (short Transmission Time Interval, sTTI).

In the embodiments of this application, the time-frequency resource used in the communications system 100 for wireless communication may be divided into a plurality of TTIs in time domain. The TTI is a commonly used parameter in a current communications system (for example, the LTE system), and is a scheduling unit for scheduling data transmission on a radio link. In the prior art, it is usually considered that 1 TTI=1 ms. In other words, one TTI is one subframe (subframe) or two slots (slot). The TTI is a basic time unit in radio resource management (such as scheduling).

In a communications network, a delay is a key performance indicator, and affects use experience of a user. With development of a communications protocol, a physical layer scheduling interval that most significantly affects the delay becomes smaller. The scheduling interval (namely, the TTI) is initially 10 ms in WCDMA, then shortened to 2 ms in high speed packet access (High Speed Packet Access, HSPA), and shortened to 1 ms in long term evolution (Long Term Evolution, LTE).

Due to a low-delay service requirement, a shorter TTI frame structure needs to be introduced for a physical layer, to further shorten the scheduling interval and improve user experience. For example, in the LTE system, a TTI length may be shortened from 1 ms to a range from 1 symbol (symbol) to 1 slot (including seven symbols). The above symbol may be an orthogonal frequency division multiplexing (Orthogonal Frequency Division Multiplexing, OFDM) symbol or a single carrier frequency division multiple access (Single Carrier Frequency Division Multiple Access, SC-FDMA) symbol in the LTE system, or may be a symbol in another communications system. For another example, a TTI length in a 5G communications system is also less than 1 ms.

In the LTE system, during data transmission that is based on a TTI whose length is 1 ms, a round trip time (Round-Trip Time, "RTT" for short) of the data transmission is 8 ms. It is assumed that a processing time is proportionally reduced relative to that for scheduling of the existing TTI whose length is 1 ms. In other words, an existing RTT delay is still followed. During data transmission that is based on an sTTI whose length is 0.5 ms, an RTT of the data transmission is 4 ms. A delay can be half reduced relative to data transmission that is based on the TTI whose length is 1 ms. Therefore, user experience is improved.

A TTI whose length is less than 1 ms can be referred to as an sTTI. For example, in the LTE system, a length of the sTTI may be any length of one symbol to seven symbols, or a length of the sTTI may be a combination of at least two different lengths in one symbol to seven symbols. For example, 1 ms includes six sTTIs, and lengths of the sTTIs may be respectively three symbols, two symbols, two symbols, two symbols, two symbols, and three symbols. Alternatively, 1 ms includes four sTTIs, and lengths of the sTTIs may be respectively three symbols, four symbols, three symbols, and four symbols, or may be a combination of other different lengths.

In addition, an uplink sTTI length may be the same as a downlink sTTI length. For example, the uplink sTTI length and the downlink sTTI length each are two symbols.

Alternatively, an uplink sTTI length may be greater than a downlink sTTI length. For example, the uplink sTTI length is seven symbols, and the downlink sTTI length is two symbols.

Alternatively, an uplink sTTI length may be less than a downlink sTTI length. For example, the uplink sTTI length is four symbols, and the downlink sTTI length is one subframe.

A data packet whose TTI length is less than one subframe or 1 ms is referred to as a short TTI data packet. Short TTI data transmission may be performed consecutively or inconsecutively in frequency domain. It should be noted that, for backward compatibility, both data transmission based on the TTI whose length is 1 ms and data transmission based on the sTTI may coexist in a system.

In the embodiments of this application, a TTI (for example, a TTI whose length is 1 ms or a TTI whose length is longer than 1 ms) specified in the prior art (for example, the LTE system) and the sTTI are collectively referred to as a TTI. In addition, in the embodiments of this application, a length of a TTI may change based on an actual requirement.

It should be understood that the foregoing illustrated time unit structures are merely examples for description. This is not specifically limited in the embodiments of this application. The time unit structure may be randomly changed based on an actual requirement. For example, in an LTE system that does not support the sTTI, one time unit may be one subframe (Subframe). For another example, for an LTE system that supports the sTTI, one time unit may include one sTTI, one time unit may include one slot (Slot), one time unit may include one or more (for example, a positive integer less than 7 or a positive integer less than 6) symbols, or one time unit may be one subframe.

It should be noted that, in the embodiments of this application, a length (or information transmission duration) used to transmit information in a time unit may be 1 ms, or may be less than 1 ms.

In the embodiments of this application, a basic time unit of the grant-free transmission may be one TTI (for example, the foregoing sTTI). After an sTTI technology is introduced, the grant-free transmission may include downlink data channel receiving or uplink data channel sending whose TTI length is 1 ms or less than 1 ms.

In this embodiment of this application, a frequency domain resource (or a spectrum resource) in the transmission resource used in the communications system 100 may be a licensed resource, or a frequency domain resource in the resource used in the communications system 100 may belong to a licensed band.

Alternatively, in this embodiment of this application, a frequency domain resource (or a spectrum resource) in the resource (the transmission resource or the time-frequency resource) used in the communications system 100 may belong to an unlicensed band (or an unlicensed resource).

The unlicensed resource may be a resource that can be shared by communication devices.

Resource sharing in the unlicensed band means that for use of a particular spectrum, limitations are posed only on indicators such as transmit power and out-of-band emission, to ensure that a plurality of devices sharing the band meet a basic coexistence requirement. An operator can implement network capacity offloading by using an unlicensed band resource, but needs to comply with regulatory requirements of different regions and different spectrums on the unlicensed band resource. These requirements are usually posed to protect a public system such as radar and to ensure that a plurality of systems fairly coexist and cause as little negative impact to each other as possible, and include a transmit power limit, an out-of-band emission indicator, indoor and outdoor use restrictions. In addition, some regions further have some additional coexistence policies and the like. For example, communications devices can use a time-frequency resource through contention or listening, for example, listen before talk (Listen Before Talk, LBT).

As an example instead of a limitation, in the embodiments of this application, the unlicensed resource may include a band near 5 GHz, a band near 2.4 GHz, a band near 3.5 GHz, and a band near 60 GHz.

As an example instead of a limitation, for example, the communications system 100 may use a long term evolution (Licensed-Assisted Access Using LTE, LAA-LTE) technology on an unlicensed spectrum resource (for example, an unlicensed carrier), or may use a technology that supports the communications system in independent deployment in an unlicensed band, such as Standalone LTE over unlicensed spectrum or MuLTEFire, or may use an LTE-U (LTE-U, LTE Advanced in Unlicensed Spectrums) technology. In other words, the communications system 100 may deploy the LTE system independently on an unlicensed band, to complete communication on the unlicensed band by using an LTE air interface protocol. The system does not include a licensed band. A technology such as centralized scheduling, interference coordination, or hybrid automatic request retransmission (Hybrid Automatic Repeat reQuest, "HARQ" for short) may be used in the LTE system deployed on the unlicensed band. Compared with an access technology such as Wi-Fi, the technology has better robustness, can have higher spectral efficiency, and provide a larger coverage area and better user experience.

In addition, in the embodiments of this application, each communications device in the communications system 100 may further perform wireless communication by using a licensed spectrum resource. In other words, the communications system 100 in the embodiments of this application is a communications system that can use a licensed band.

A licensed time-frequency resource is generally a time-frequency resource that can be used only after being approved by a national or local wireless committee. Different systems such as an LTE system and a Wi-Fi system, or systems of different operators cannot share the licensed time-frequency resource.

It should be noted that there may be no fixed frame structure for information transmission in the LTE system in the unlicensed band. In summary, the network device, such as a base station or a cell, may determine transmission duration of downlink information and/or transmission duration of uplink information after determining to preempt an unlicensed spectrum resource based on downlink service load and/or uplink service load, or another consideration. Further, after preempting the unlicensed spectrum resource, the network device may flexibly adjust a quantity of time units including the downlink information (that is, downlink time units), a quantity of time units including the uplink information (that is, uplink time units), transmission duration of downlink information included in each downlink time unit, and transmission duration of uplink information included in each uplink time unit.

Before transmitting data in the unlicensed band, a communications device (for example, the terminal device or the network device) needs to listen on a channel, that is, needs to perform LBT. After successfully performing the LBT, the communications device can continuously occupy the channel, to be specific, the communications device can transmit data in consecutive time units. For downlink transmission, the consecutive time units may be referred to as a downlink burst (DL Burst), and for uplink transmission, the consecutive time units may be referred to as an uplink burst (UL Burst).

The downlink burst may include consecutive time units that the network device (such as an eNB) or a cell (Cell) of the network device may continuously occupy after preempting an unlicensed band resource.

Duration of a downlink burst is not longer than maximum time for continuous transmission by the network device (or the cell) on the unlicensed spectrum resource, and the maximum time may also be referred to as a maximum channel occupancy time (Maximum Channel Occupied Time, MCOT). When continuously occupying the channel for a length of the MCOT, the network device needs to release the channel and re-preempt a channel through the LBT. The length of the MCOT may be related to region regulation constraints. For example, in Japan, the MCOT may be equal to 4 ms, and in Europe, the MCOT can be equal to 8 ms, or 10 ms, or 13 ms.

Similarly, the uplink burst may include consecutive time units that the terminal device can continuously occupy after preempting an unlicensed band resource. For a single terminal device, duration of an uplink burst is not longer than an MCOT on the unlicensed band resource. In this embodiment of this application, the uplink transmission may include uplink burst transmission that is referred to as the "uplink burst" for short. Before performing uplink transmission, the terminal device needs to first determine, for example, through the LBT, whether a time-frequency resource (for example, a resource in an unlicensed band scheduled by the network device) scheduled by the network device is available, and a specific location at which the LBT is performed is not specifically limited in this application.

The uplink burst is used as an example. In the embodiments of this application, an uplink burst may include at least one time unit (to be specific, one or more time units).

In addition, when an uplink burst includes a plurality of time units, the plurality of time units in the uplink burst are consecutive in terms of time, and consecutiveness in terms of time means that sequence numbers of time units (for example, TTIs) are consecutive. There may be a spacing (to be specific, the terminal device does not occupy a time domain resource at an end of a previous time unit or at a start of a subsequent time unit, but reserves the time domain resource as idle) or no spacing between any two adjacent time units included in an uplink burst. This is not specifically limited in the embodiments of this application.

Optionally, a plurality of consecutive time units included in each uplink burst each have a same time length.

In other words, in the embodiments of this application, time units in an uplink burst may be time units that include a same quantity of symbols.

For example, a length of each time unit in an uplink burst is one subframe.

For another example, a length of each time unit in an uplink burst is two symbols.

Alternatively, optionally, at least two of a plurality of consecutive time units included in each uplink burst have different time lengths.

In other words, in the embodiments of this application, at least two of time units in an uplink burst include different quantities of symbols.

For example, a time unit, in the uplink burst, other than a time unit that is ranked first and/or a time unit that is ranked last has duration of 1 ms (namely, one subframe). In addition, a time length of the first time unit in the uplink burst may be less than 1 ms; a time length of the last time unit in the uplink burst may be less than 1 ms; or time lengths of both the first time unit and the last time unit in the uplink burst are less than 1 ms. It should be noted that the length times of the first time unit and the last time unit may be the same or different.

For another example, a time length of a time unit in the uplink burst may be a quantity of symbols that is any positive integer less than 8, for example, the uplink burst includes six time units, and the time units each correspond to a time length of three symbols, two symbols, two symbols, two symbols, two symbols, and three symbols.

In conclusion, as an example instead of a limitation, in the embodiments of this application, the network device and the terminal device may use the transmission resource in the following manners:
1. The licensed spectrum is used in a grant-free manner.
2. The unlicensed spectrum is used in the grant-free manner.

It should be noted that the above grant-free transmission resource may be a grant-free uplink (Grant-free UpLink, GUL) radio resource. For ease of description, the following uniformly uses the GUL radio resource to describe the transmission resource in the grant-free transmission solution in the embodiments of this application.

The following describes an information transmission method according to the embodiments of this application with reference to FIG. 2 to FIG. 9.

An information transmission process in an embodiment of this application may be first described in detail with reference to FIG. 2. FIG. 2 is a schematic interaction flowchart of an information transmission method according to this embodiment of this application.

In S210, a network device allocates a grant-free uplink GUL radio resource to a terminal device, where the GUL radio resource is used by the terminal device to send uplink data, and the GUL radio resource includes at least one time unit.

The GUL radio resource may be a resource that is allocated by the network device merely to the terminal device but is not allocated to another terminal device. Alternatively, because transmission of a service of the terminal device is a burst, the terminal device may not occupy the GUL radio resource when there is no uplink service. To improve resource utilization, the network device may allocate the GUL radio resource to a plurality of terminal devices including the terminal device, so that the plurality of terminal devices share the resource through statistical multiplexing. This is not specifically limited in this embodiment of this application.

In addition, in this embodiment of this application, the GUL radio resource may be allocated to the terminal device after the network device determines that the terminal device needs to perform uplink transmission. Alternatively, the GUL radio resource may be allocated to the terminal device, for example, when the terminal device accesses a cell provided by the network device. Alternatively, the GUL radio resource may be determined among unlicensed time-frequency resources obtained through contention and may be allocated to the terminal device, for example, when the network device obtains, through contention, some or all of unlicensed time-frequency resources provided by a communications system. This is not specifically limited in this embodiment of this application.

The GUL radio resource is a subset of all available GUL radio resources allocated by the network device to the terminal device or activated by the network device. Specifically, the available GUL radio resources are periodic, and each GUL period includes at least one time unit. For any time unit in the available GUL radio resources, the terminal device may send uplink data in the time unit, or may not send uplink data in the time unit, in other words, does not occupy the time unit. For example, when the terminal device has no uplink service, or fails to perform LBT before a time unit in the GUL radio resource, the terminal device may skip (skip) the time unit without sending the uplink data. Alternatively, the terminal device may not occupy any time unit in a GUL period to send the uplink data in the GUL period, in other words, skips the GUL period. Therefore, in this implementation of this application, the GUL radio resources determined by the terminal device are all available GUL resources. To be specific, after the network device activates the terminal device to send the uplink data, the GUL radio resources are all available GUL resources used to transmit the uplink data. In other words, the GUL radio resource allocated by the network device is a resource for transmitting uplink data (UL-Shared CHannel, UL-SCH). More specifically, the GUL radio resource may be a physical uplink data channel (Physical Uplink Shared Channel, PUSCH) resource, and the GUL radio resource is also referred to as a GUL PUSCH. The GUL PUSCH also includes an sPUSCH (short PUSCH) corresponding to an sTTI shorter than 1 ms. It should be noted that the network device configures the period of the available GUL radio resources by using higher layer signaling, in other words, the GUL PUSCH is determined based on the higher layer signaling. By contrast, a PUSCH (UL grant based PUSCH) that is based on scheduling performed by the network device is scheduled based on dynamic signaling of the network device in a PDCCH.

In addition, the network device configures the GUL PUSCH without a scheduling request (Schedule Request, SR) reported by the terminal device. By contrast, the PUSCH that is based on scheduling performed by the network device is indicated to the terminal device after the network device receives the SR sent by the terminal device.

In addition, compared with the available GUL resources that are periodic and consecutive, the PUSCH that is based on scheduling performed by the network device takes effect only once, and the scheduled PUSCH corresponds to a limited quantity of time units within a limited time range and does not continuously take effect.

It should be noted that GUL is also referred to as autonomous uplink (Autonomous UL, AUL) transmission.

It should be noted that the GUL radio resource is used by the terminal device to send the uplink data information UL-SCH. Specifically, the GUL radio resource is the physical uplink data channel PUSCH resource, and the GUL radio resource is also referred to as the GUL PUSCH.

It should be noted that in this embodiment of this application, one time unit may be one TTI, and the TTI is a time domain granularity for uplink resource allocation or uplink transmission, or the TTI is a minimum time domain unit for uplink transmission performed by the terminal device. The TTI may be a 1 ms TTI, or referred to as a subframe that is 1 ms in length; or may be an sTTI shorter than 1 ms, or referred to as a mini-slot (mini-slot). A time domain resource occupied by the sTTI is shorter than the 1 ms TTI in length. In other words, when a TTI corresponding to an uplink data channel is an sTTI, a time domain resource occupied by the TTI is shorter than 1 ms in length. An optional length that the sTTI may support includes a structure such as 7 SC-FDMA symbols (SC-FDMA Symbol, SS), 1 SS, 2 SSs, 3 SSs, or 4 SSs. The sTTI also supports another TTI length shorter than 1 ms.

It should be noted that any time unit included in the GUL radio resource may be either a complete time unit or a partial time unit. In an example in which one time unit is one TTI, a complete TTI indicates that the terminal device may occupy all uplink single carrier frequency division multiple access (Single-carrier Frequency-Division Multiple Access, SC-FDAM) symbols (for example, 14 symbols in a 1 ms TTI or 7 symbols in a 7-SS sTTI) included in the subframe to send the uplink data. A partial TTI indicates that the terminal device may occupy only some of uplink time domain resources included in the TTI to send the uplink data, while the other uplink time domain resources of the TTI remain idle and are not used to send the uplink data. For example, when the TTI is a 1 ms TTI, namely, one subframe, a complete subframe includes 14 symbols, and a partial subframe includes a<14 symbols. The terminal device sends the uplink data from the (b+1)^{th} symbol continuing to the (b+a)^{th} symbol, and the first b (b>0) symbols and the last d (d>0) symbols are reserved as a spacing and are not used to send information, where b+a+d=14.

In addition, in this embodiment of this application, as an example instead of a limitation, for example, the network device may send, to the terminal device, related signaling (for example, the higher layer signaling and/or the dynamic signaling in the PDCCH) used to configure the GUL radio resource, so that the terminal device can determine the GUL radio resource. Specifically, the terminal device can determine the at least one time unit included in the GUL radio resource in time domain, and further, the terminal device can determine a total quantity and a location of the at least one time unit.

It should be further noted that, in this embodiment of this application, when the GUL radio resource includes at least two time units, any two of the at least two time units may have a same time length (also referred to as a TTI length), or may have different time lengths.

It should be further noted that, in this embodiment of this application, as described above, the at least one time unit may be consecutive in terms of time, or may be at least one time unit that is inconsecutive in terms of time.

Specifically, consecutiveness in terms of time means that sequence numbers of time units (for example, TTIs) are consecutive. There may be a spacing (in other words, the terminal device does not occupy a time domain resource at an end of a previous time unit or at a start of a subsequent time unit, but reserves the time domain resource as idle) or no spacing between any two adjacent time units included in an uplink burst. This is not specifically limited in this embodiment of this application.

When being consecutive in terms of time, the at least one time unit is also referred to as a GUL uplink burst. As an example instead of a limitation, for ease of description, the following describes this embodiment of this application by using an example in which the at least one time unit is the GUL uplink burst, but it should be understood that this embodiment of this application is also applicable to at least one inconsecutive time unit.

Optionally, the terminal device sends the uplink data information in each time unit of the at least one time unit or the GUL uplink burst.

It should be understood that when the GUL uplink burst includes only one time unit, the GUL uplink burst is a first time unit.

In S220, the terminal device sends, in the first time unit in the at least one time unit, first feedback information for downlink transmission.

Specifically, before sending feedback information #1 (an example of the first feedback information), the terminal device determines a time unit #1 (an example of the first time unit) in the at least one time unit, so as to send the feedback information #1 in the time unit #1.

The time unit #1 may be any time unit in the GUL uplink burst, or at least two time units in the GUL uplink burst, and each time unit carries the feedback information #1.

As an example instead of a limitation, the downlink transmission may include downlink data transmission, or may include downlink control information transmission or reference signal transmission. Correspondingly, when the downlink transmission includes the downlink data transmission, the feedback information #1 may be downlink hybrid automatic repeat request acknowledgement (DL Hybrid Automatic Repeat request-Acknowledgement, DL HARQ-ACK) information, and when the downlink transmission is transmission for a downlink channel, the feedback information #1 may be aperiodic channel state information (Aperiodic Channel State Information, aCSI).

Therefore, in S220, the network device receives the feedback information #1, so that the network device can determine a status of the downlink transmission based on the feedback information #1.

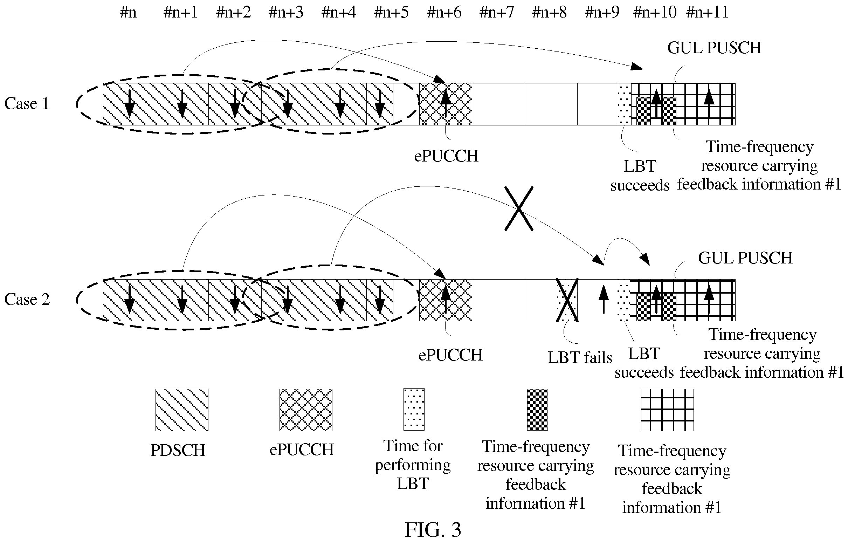

FIG. 3 is a schematic diagram of distribution of a time-frequency resource for information transmission in time domain according to this embodiment of this application. FIG. 3 shows two cases, and each time unit is a 1 ms TTI, namely, one subframe.

In a first case, a subframe #(n+10) is configured as a GUL radio resource, the feedback information #1 may be the DL HARQ-ACK information, and the network device triggers the terminal device to carry the feedback information #1 in an enhanced physical uplink control channel (Enhanced PUCCH, ePUCCH) of a subframe #(n+6). When the terminal device successfully performs LBT and occupies the frame #(n+6), feedback information #1 corresponding to subframes #n to #(n+2) may be carried in the ePUCCH that is based on triggering performed by a base station in the prior art. However, in the prior art, DL HARQ-ACKs corresponding to later subframes #(n+3) to #(n+5) are carried only by uplink transmission triggered by next downlink transmission, while in this embodiment of this application, the feedback information #1 corresponding to the later subframes #(n+3) to #(n+5) may be carried in the GUL subframe #(n+10), so that the feedback information #1 corresponding to later downlink subframes in a downlink burst can also be fed back relatively early. In a second case, the network device schedules the terminal device to send a PUSCH on a subframe #(n+9) and to carry feedback information #1 corresponding to #(n+3) to #(n+5) in the subframe #(n+9), but the terminal device fails to perform LBT and does not preempt #(n+9). The terminal device may continue to perform the LBT, occupy a GUL subframe #(n+10) after the LBT succeeds, send the PUSCH, and carry the feedback information #1 corresponding to #(n+3) to #(n+5) in the subframe #(n+10), so that the feedback information #1 corresponding to later downlink subframes in a downlink burst can also be fed back relatively early. In other words, even if a resource scheduled by the network device to carry the feedback information #1 is before the GUL radio resource, if the LBT fails before the terminal device sends the feedback information #1, feedback cannot be performed in time for #(n+3) to #(n+5) either. In either case, in the prior art, the terminal device can only wait to send, in uplink transmission scheduled or triggered by a next downlink burst, the feedback information #1 corresponding to the subframes #(n+3) to #(n+5), resulting in a relatively long delay for feedback corresponding to the subframes #(n+3) to #(n+5).

Therefore, according to the information transmission method provided in this embodiment of this application, the terminal device can send the first feedback information for the downlink transmission on the GUL radio resource allocated by the network device, to be specific, carry the first feedback information in the GUL PUSCH without having to wait for a PUSCH or an (e)PUCCH or an sPUCCH (short PUCCH) scheduled or triggered by next downlink transmission.

Therefore, a delay of the first feedback information is reduced and downlink transmission adaptation precision is improved.

Optionally, the first feedback information includes at least one of the aperiodic channel state information aCSI and the downlink hybrid automatic repeat request acknowledgement DL HARQ-ACK information.

The following separately describes the aCSI and the DL HARQ-ACK information in detail.

The DL HARQ-ACK is a feedback for a receiving status of a downlink PDSCH (or downlink data). If the terminal device detects that the network device sends the PDSCH, and correctly demodulates the downlink data (or a downlink data block) carried by the PDSCH, the receiving status fed back by the terminal device for the downlink data (or a HARQ process corresponding to the downlink data) is "correct reception" (referred to as an ACK). If the terminal device detects that the network device sends the PDSCH, and does not correctly demodulate the downlink data carried by the PDSCH, the receiving status fed back by the terminal device for the downlink data (or a HARQ process corresponding to the downlink data) is "false reception" (referred to as a NACK). If the terminal device does not detect that the network device sends the PDSCH, the receiving status fed back the terminal device for the downlink data (or a HARQ process corresponding to the downlink data) is "discontinuous transmission" (Discontinuous Transmission, DTX). The DL HARQ-ACK may be a feedback for a receiving status of a DL HARQ process, or feedbacks for receiving statuses of at least two HARQ processes, or a bit map, to be specific, feedbacks for receiving statuses of all HARQ processes.

The CSI is channel state information that is fed back after the terminal device measures the downlink channel. After receiving the CSI, the network device may determine channel link quality based on the CSI, and select an appropriate modulation and coding scheme (Modulation and Coding Scheme, MCS) and a precoding codebook in a multi-antenna transmission mode. The CSI includes at least one of channel quality information (Channel Quality Information, CQI), precoding matrix indicator (Precoding Matrix Indicator, PMI) information, and rank indicator (Rank Indicator, RI) information. In addition, the CSI includes periodic CSI and aperiodic CSI (aperiodic CSI, aCSI). A sending period of the periodic CSI is configured by using higher layer signaling. The terminal device periodically feeds back the periodic CSI after receiving the higher layer signaling. The aCSI is triggered by CSI request signaling included in uplink grant UL grant sent by the network device. After receiving the UL grant, the terminal device sends, in a same subframe, aCSI feedback information and a PUSCH scheduled by the UL grant. The CSI request signaling may be 1 bit, and is used to trigger or not to trigger the terminal device to carry the aCSI in the PUSCH, and the aCSI information is channel state information for a carrier on which the UL grant is located. Alternatively, the CSI request signaling may be 2 bits. In addition to triggering or not triggering the terminal device to carry the aCSI in the PUSCH, when triggering the terminal device to carry the aCSI in the PUSCH, the CSI request signaling may further instruct the terminal device to feed back aCSI of different quantities of bits, for example, different indication states indicate that the terminal device feeds back aCSI for different carrier quantities or carrier sets.

It should be understood that when the feedback information #1 includes the DL HARQ-ACK information, the DL HARQ-ACK information may be a feedback for a receiving status of data information in a downlink time unit (associated with the first time unit in time sequence), or a feedback for receiving statuses of data information in at least two downlink time units, or may be in a form of bit mapping, including receiving statuses corresponding to all DL HARQ-ACK processes of the terminal device.

In this embodiment of this application, the time unit #1 may be a time unit determined based on uplink control information (that is, a case A), or the time unit #1 may be a time unit determined based on downlink transmission (that is, a case B). When the time unit #1 is the time unit determined based on the uplink control information G-UCI, the time unit #1 may be determined only by the terminal device. When the time unit #1 is the time unit determined based on the downlink transmission, the time unit #1 may be determined jointly by the terminal device and the network device.

The following separately describes the foregoing two cases in detail in this embodiment of this application.

### Case A

Optionally, the first time unit and a second time unit in the at least one time unit are a same time unit, or a time domain location of the first time unit is after a time domain location of the second time unit in the at least one time unit, the second time unit is a time unit in which the terminal device sends the grant-free uplink control information G-UCI, and the G-UCI includes scheduling information for uplink transmission.

Specifically, to facilitate the network device to identify a PUSCH (denoted as a GUL PUSCH for ease of understanding and distinction) sent by the terminal device on the GUL radio resource, demodulate the GUL PUSCH, and perform retransmission combining, the terminal device needs to carry the G-UCI in the GUL PUSCH, and the G-UCI includes the scheduling information for the uplink data. For the network device, the network device first receives the G-UCI, and demodulates the uplink data in the PUSCH after obtaining the G-UCI.

The terminal device adds the G-UCI to the GUL PUSCH as the scheduling information. By contrast, the scheduling information of the PUSCH that is based on scheduling performed by the network device is indicated by the network device, and the terminal device does not need to carry the G-UCI in the PUSCH.

The scheduling information in the G-UCI includes at least one of the following:
(1) User identity (denoted as UE ID) of the terminal device: Because the network device may configure a same GUL PUSCH for at least two terminal devices, in order that the network device identifies a terminal device that performs sending in the GUL PUSCH, the terminal device needs to carry the UE ID information in the GUL PUSCH while transmitting data information in the GUL PUSCH. For example, the UE ID information may be included in the G-UCI, or the UE ID may be scrambled for a CRC in the G-UCI.
(2) HARQ information included in a time unit in which the G-UCI is located or in the GUL uplink burst: In order that the network device identifies newly-transmitted or retransmitted data and performs retransmission combining on the retransmitted data, the terminal device needs to carry HARQ-related information in the G-UCI. Specifically, each time unit or PUSCH may carry at least one transport block TB or HARQ process. For a time unit carrying the G-UCI, if the G-UCI indicates only scheduling information of uplink data in the time unit, the G-UCI carries the HARQ information of the HARQ process carried in the time unit. If the G-UCI indicates scheduling information of all time units in a GUL uplink burst in which the time unit is located, the G-UCI carries HARQ information of all HARQ processes carried in the uplink burst. The HARQ information includes at least one of the following:
   (a) a process number of at least one HARQ process included in the time unit or the GUL uplink burst, used to combine TBs corresponding to a same HARQ process number during retransmission combining, where retransmitted data information and initially transmitted data information are the same, and TBSs of the data information are the same;
   (b) a new data indicator (New Data Indicator, NDI) of at least one HARQ process included in the time unit or the GUL uplink burst, used to report whether data information sent in the GUL PUSCH is initially transmitted or retransmitted;
   (c) a redundancy version (Redundancy Version, RV) of at least one HARQ process included in the time unit or the GUL uplink burst, used to report a retransmission version number of data information sent in the GUL PUSCH for the network device to perform retransmission combining;
   (d) an uplink maximum channel occupancy time UL MCOT corresponding to the GUL uplink burst in which the G-UCI is located, where if a time domain length of the uplink burst is less than the UL MCOT, a remaining MCOT may be shared with the network device, so that the network device can send downlink transmission within the remaining MCOT after performing a single LBT; and
   (e) a time domain length of the GUL uplink burst in which the G-UCI is located (UL burst length), where when the G-UCI is carried only in one or some time units or PUSCHs of the GUL uplink burst, the network device needs to know the time domain length of the GUL uplink burst, to demodulate data information in a PUSCH that does not carry the G-UCI. For example, the time domain length of the GUL uplink burst may be a quantity of time units occupied by the uplink burst.

In this embodiment of this application, G-UCI may be carried in each time unit, merely indicating scheduling information of uplink data corresponding to each time unit, or may be carried in one or some time units in a GUL uplink burst. For example, G-UCI is carried in a time unit ranking first in the at least one time unit, the G-UCI includes scheduling information for all time units in the GUL uplink burst, and other time units in the uplink burst are used to send data information but do not carry the G-UCI.

Therefore, by using a time sequence relationship between the first time unit and the second time unit, the network device can determine the first time unit based on the G-UCI. In addition, the network device always needs to detect the G-UCI, and therefore, complexity of blindly detecting the first feedback information by the network device is also reduced (in other words, a time range in which the network device detects the first feedback information can be reduced).

The following describes the time unit #1 and the time unit #2 (an example of the second time unit) in detail.

### Case A1

The time unit #1 and the time unit #2 are a same time unit.

In other words, the terminal device always adds the feedback information #1 to a time unit carrying the G-UCI.

It is also understood that when the G-UCI is carried in each time unit in the GUL uplink burst, the feedback information #1 and the G-UCI are always carried in a same time unit. Alternatively, when the G-UCI is carried in one or more (but not each) time units in the GUL uplink burst, and when the terminal device needs to send the feedback information #1, the terminal device always chooses to send the feedback information #1 in the time unit carrying the G-UCI.

In this case, the feedback information #1 and the G-UCI may be encoded in two encoding modes: independent encoding and joint encoding.

Optionally, when the first time unit and the second time unit are the same time unit, the first feedback information and the G-UCI are independently encoded.

Specifically, that the feedback information #1 and the G-UCI are independently encoded means that the terminal device separately encodes the two types of information. In other words, an output bit obtained after the terminal device encodes the G-UCI is determined only by a useful information bit of the G-UCI, an output bit obtained after the terminal device encodes the feedback information #1 is determined only by a useful information bit of the feedback information #1, and after the feedback information #1 and the G-UCI are encoded, two different code blocks are generated and respectively mapped to different physical resources. Further, the network device separately decodes the G-UCI and the feedback information #1 after the G-UCI and the feedback information #1 are respectively mapped to the physical resources.

In this way, the first feedback information and the G-UCI are independently encoded, so that information related to the first feedback information can be put in the G-UCI, and the network device can obtain the first feedback information based on the information related to the first feedback information after obtaining the G-UCI, thereby effectively reducing complexity of blind detection.

Optionally, the first feedback information and the G-UCI are jointly encoded.

Specifically, that the G-UCI and the feedback information #1 are jointly encoded means that the terminal device encodes both types of information. In other words, an output bit obtained after the G-UCI and the feedback information #1 are encoded is jointly determined by the G-UCI and the feedback information #1. One code block is generated after the feedback information #1 and the G-UCI are jointly encoded, and is mapped to a same physical resource. Further, the network device decodes the code block obtained after the G-UCI and the feedback information #1 are jointly encoded, to separately obtain the G-UCI and the feedback information #1.

When the time unit carrying the G-UCI also carries the feedback information #1, an area of the uplink control information is a code block obtained after the G-UCI and the feedback information #1 are jointly encoded. When the time unit carrying the G-UCI does not carry the feedback information #1, an area of the uplink control information is a code block obtained after the G-UCI is encoded. In both cases, corresponding code block sizes are different and occupied physical resources are different.

Therefore, the network device may perform blind detection on a code block obtained after joint encoding or a physical resource, to determine whether the area of the uplink control information includes the feedback information #1. For example, when the code block that is obtained after the G-UCI and the feedback information #1 are jointly encoded is demodulated and verified, it is determined that the time unit carries the feedback information #1, and when the code block that is obtained after the G-UCI is encoded is demodulated and verified, it is determined that the time unit carries only the G-UCI.

In addition, the terminal device may also determine, based on different uplink control information transport formats (UCI format), content of the uplink control information carried in the time unit. For example, a transport format with a larger quantity of bits indicates that the uplink control information in the time unit includes the G-UCI and the feedback information #1, and a transport format with a smaller quantity of bits indicates that the uplink control information in the time unit includes only the G-UCI.

In this way, the terminal device does not need to send information related to the feedback information #1. This reduces signaling overheads, but also increases the complexity of performing blind detection by the network device.

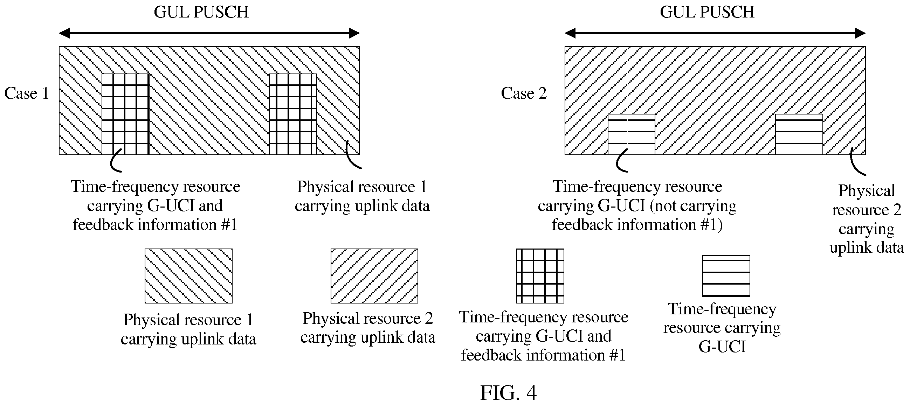

FIG. 4 shows distribution of the G-UCI, the feedback information #1, and data information in the GUL PUSCH. In a case 1 in FIG. 4, the G-UCI and the feedback information #1 are jointly encoded. The network device performs blind detection on the uplink control information in the GUL PUSCH, and when detecting the code block obtained after joint encoding, the network device determines that the code block includes the G-UCI and the feedback information #1, so as to obtain the feedback information #1. In addition, the network device may further determine, based on a physical resource occupied by the code block obtained after joint encoding, a physical resource 1 corresponding to the uplink data information, to be specific, the physical resource 1 occupied by the uplink data information is a physical resource, in the GUL PUSCH, other than the physical resource occupied by the G-UCI and the feedback information #1, so that the uplink data information is correctly demodulated. In a case 2 in FIG. 4, there is only the G-UCI in the area of the uplink control information, and the network device performs blind detection on the uplink control information in the GUL PUSCH. When detecting the code block obtained after the G-UCI is encoded, the network device determines that the code block includes only the G-UCI. In addition, the network device determines, based on a physical resource occupied by the code block obtained after the G-UCI is encoded, a physical resource 2 corresponding to the uplink data information, to be specific, the physical resource 2 occupied by the uplink data information is a physical resource, in the GUL PUSCH, other than the physical resource occupied by the G-UCI, so that the uplink data information is correctly demodulated.

### Case A2

A time domain location of the time unit #1 is after a time domain location of the time unit #2.

In other words, the time unit #1 and the time unit #2 are two time units at different time domain locations. The time unit #1 and the time unit #2 may be two time units in a same GUL uplink burst, or may be two time units in different GUL uplink bursts. This is not limited in this embodiment of this application.

In this way, the time unit #1 and the time unit #2 are not two same time units, and more physical resources can be reserved for each time unit to improve uplink data transmission performance. In addition, there is no need to design a new channel format to support physical resource mapping of the G-UCI and the feedback information #1, reducing design complexity.

Optionally, a time sequence relationship between the time unit #1 and the time unit #2 is predefined.

Specifically, the predefined time sequence relationship may be specified in a protocol, for example, the time unit #1 is the k^{th} time unit after the time unit #2, where k is an integer greater than or equal to 1, and for the GUL uplink burst, k is an integer less than the time domain length of the uplink burst (namely, the total quantity of time units occupied by the uplink burst).

More specifically, k=1, to be specific, the time unit #1 is a time unit ranking first after the time unit #2 or a next time unit after the time unit #2.

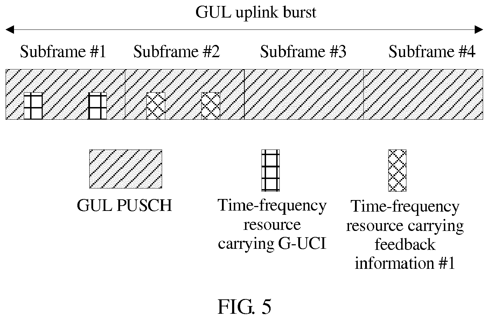

FIG. 5 is a schematic diagram of the time sequence relationship between the time unit #1 and the time unit #2 according to this embodiment of this application. The time unit #1 is a next subframe after the time unit #2.

As shown in FIG. 5, the time domain length of the GUL uplink burst is four subframes. The G-UCI is carried in the first subframe in the GUL uplink burst, namely, a subframe #1, and k=1, to be specific, a subframe in which the feedback information #1 is located is a subframe #2.

In this way, the first time unit is determined by using the predefined time sequence relationship between the first time unit and the second time unit, so that the terminal device does not need to send signaling to notify the time domain location of the first time unit. In this way, signaling overheads are effectively reduced, and the complexity of blind detection of the network device is also reduced.

As an example instead of a limitation, the above predefined time sequence relationship may be applied to not only a case in which the time unit #1 and the time unit #2 are different time units, but also a case in which the time unit #1 and the time unit #2 are a same time unit.

The foregoing describes in detail a time domain location relationship between the time unit #1 and the time unit #2 in this embodiment of this application.

In this embodiment of this application, the time domain location of the time unit #1 may also be predefined, to be specific, the time domain location of the time unit #1 in the at least one time unit is predefined, or a time domain location of the time unit #1 in the GUL uplink burst is predefined, or the time unit #1 is the p^{th} time unit in the GUL uplink burst, where p is an integer greater than or equal to 1, and p is also an integer less than the time domain length of the uplink burst (namely, the total quantity of time units occupied by the uplink burst).

Optionally, the first time unit is a last time unit or a penultimate time unit in the at least one time unit.

Specifically, the at least one time unit includes m time units, and the time unit #1 is the n^{th} time unit in the at least one time unit, where n=m, or n=m-1, and m is an integer greater than or equal to 2. Alternatively, the time unit #1 is a last or penultimate time unit in the GUL uplink burst.

In addition, the terminal device may report, by using the G-UCI, the total quantity of time units included in the at least one time unit (or the GUL uplink burst), or the time domain length (UL burst length) of the at least one time unit (or the GUL uplink burst), or a time domain location of the last time unit in the at least one time unit (or the GUL uplink burst). In this way, the network device can obtain the information by receiving the G-UCI and determine information about a time domain location of the at least one time unit, so that the time domain location of the time unit #1 is determined based on the predefined time domain location of the time unit #1 in the at least one time unit. For example, when the time unit #1 is the last time unit in the GUL uplink burst, the network device determines the length of the GUL uplink burst by using the G-UCI, and further determines the last time unit in the GUL uplink burst.

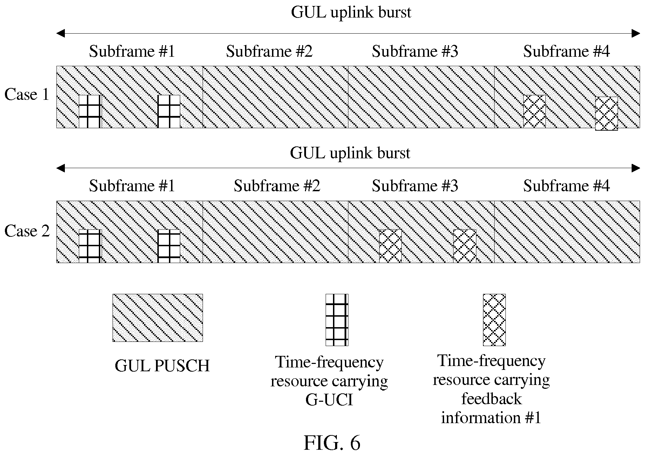

FIG. 6 is a schematic diagram of the time domain location of the time unit #1 according to this embodiment of this application. As shown in FIG. 6, the time domain length of the GUL uplink burst is four subframes, and the G-UCI is carried in the first subframe in the GUL uplink burst, namely, a subframe #1. When n=4, a subframe in which the feedback information #1 is located is a subframe #4, to be specific, the subframe in which the feedback information #1 is located is the last time unit in the GUL uplink burst. When n=3, a subframe in which the feedback information #1 is located is a subframe #3, to be specific, the subframe in which the feedback information #1 is located is the penultimate time unit in the GUL uplink burst.

In this way, the first time unit is located in the last time unit or the penultimate time unit in the at least one time unit, so that the first time unit can carry feedback information #1 corresponding to a relatively large amount of different downlink data, thereby effectively reducing a feedback delay.

As described above, the time sequence relationship between the time unit #1 and the time unit #2 may be predefined, but data or information transmission dynamically changes. Therefore, considering flexibility, the time domain location of the time unit #2 may be dynamically indicated by using signaling.

Optionally, the G-UCI is further used to indicate the time domain location of the first time unit in the at least one time unit.

Correspondingly, the network device may determine the time domain location of the time unit #1 based on the G-UCI, and further receives the first feedback information based on the time domain location of the time unit #1.

Specifically, the G-UCI is used to indicate a time unit in which the time unit #1 is located in the GUL uplink burst, and the time unit #1 and the time unit #2 may be a same time unit or may be different time units.

For example, the GUL uplink burst includes subframes #1 to #4, and the G-UCI indicates that a time domain location of a time unit in which the feedback information #1 is located is a subframe #3.

Specifically, the time domain location in the at least one time unit is a time unit or time units in which the feedback information #1 is carried in the GUL uplink burst.

The time domain location of the time unit #1 may be indicated in a plurality of manners.

For example, the time domain location of the time unit #1 may be indicated based on bit mapping, and each time unit in the GUL uplink burst corresponds to one bit, to indicate whether the corresponding time unit carries the feedback information #1.

More specifically, the time domain length of the GUL uplink burst is six subframes, and subframes are mapped by using 6 bits. Each bit corresponds to one subframe, an indication state of a bit value "0" is used to indicate that the subframe carries the feedback information #1, and an indication state of a bit value "1" is used to indicate that the subframe does not carry the feedback information #1.

For another example, the time domain location of the time unit #1 may also be indicated by a bit field in the G-UCI, and different indication states may indicate a time unit in which the feedback information #1 is carried in the GUL uplink burst.

More specifically, the time domain length of the GUL uplink burst is eight subframes, and eight indication states of 3-bit indication information may respectively indicate that the feedback information #1 is carried in the first subframe to the eighth subframe in the GUL uplink burst.

In this way, the time domain location of the first time unit in the at least one time unit is indicated by using the G-UCI, effectively reducing the complexity of blind detection of the network device, and the time domain location is dynamically indicated by using the G-UCI, improving system flexibility.

In this embodiment of this application, a time domain resource of the GUL PUSCH is semi-statically configured, and the terminal device may determine a time unit in which the terminal device sends the data information and the feedback information #1, in other words, the terminal device does not need to send the data information in each time unit. In a time unit that is occupied to send the data information, the feedback information #1 may be carried or may not be carried (for example, when new DL HARQ-ACK information needs to be sent or no CSI is sent for a relatively long time period, the feedback information #1 may be carried in the GUL PUSCH, or the feedback information #1 may not be carried in the GUL PUSCH to reduce control information overheads). However, the network device does not know a time unit to which the terminal device adds the feedback information #1. Therefore, the network device and the terminal device may have inconsistent understanding of whether a GUL PUSCH carries the feedback information #1, a quantity of bits of the feedback information #1, and a physical resource occupied by the feedback information #1. This increases complexity of detecting the feedback information #1 on the GUL PUSCH by the network device. In addition, if the feedback information #1 is rate matched to the PUSCH, whether the terminal device sends the feedback information #1 and the quantity of bits of the feedback information #1 affect a data block size (Transmission Block Size, TBS) of the PUSCH and a physical resource occupied by the PUSCH. Similarly, if the network device and the terminal device have inconsistent understanding of the feedback information #1, this also causes inconsistent understanding of the TBS and the physical resource of the PUSCH, and affects demodulating the PUSCH by the network device.

Therefore, in order that the network device and the terminal device have consistent understanding of the feedback information #1, and further, the network device can correctly demodulate the feedback information #1 carried in the GUL PUSCH and the data information carried in the PUSCH, and to improve uplink transmission efficiency, the following manners may be used in this embodiment of this application:

Optionally, the G-UCI is further used to instruct the terminal device to send the first feedback information.

Specifically, the GUL uplink burst always carries the G-UCI, and the network device first detects the G-UCI before demodulating the PUSCH. Therefore, the G-UCI may be used to indicate existence of the feedback information #1, to be specific, instruct the terminal device to send the feedback information #1, or indicate whether the time unit #1 includes the feedback information #1, so that the network device can obtain the existence of the feedback information #1 after demodulating the G-UCI, demodulate the feedback information #1, and determine a physical resource of the uplink data information based on the existence of the feedback information #1, to correctly demodulate the data information.

For a G-UCI indication manner, indication may be performed based on the time sequence relationship between the time unit #1 and the time unit #2. There may be two indication manners: Indication manner 1: When the time unit #1 and the time unit #2 are a same time unit, the G-UCI may instruct the terminal device to send the feedback information #1 in the time unit #1 (or the time unit #2). Indication manner 2: When the time unit #1 and the time unit #2 are not a same time unit, the G-UCI may instruct the terminal device to send the feedback information #1 in the GUL uplink burst.

The following describes the two indication manners in detail.

### Indication manner 1:

When the time unit #1 and the time unit #2 are a same time unit, the G-UCI may instruct the terminal device to send the feedback information #1 in the time unit #1.

Specifically, the terminal device may explicitly indicate the existence of the feedback information #1 by using the G-UCI. For example, 1-bit indication information is introduced, and two different indication states corresponding to the indication information respectively represent that "a current time unit includes the feedback information #1" and "a current time unit does not include the feedback information #1".

In addition, the terminal device may implicitly indicate the existence of the feedback information #1 by using the G-UCI. For example, a new bit does not need to be introduced, but the existence of the feedback information #1 is associated with a redundancy state of a bit field or a bit that is in the G-UCI and that is used to indicate other scheduling information, or with an indication for other content.

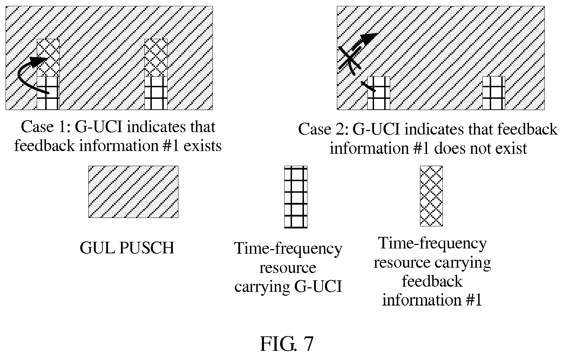

FIG. 7 shows distribution of the G-UCI, the feedback information #1, and the data information in the GUL PUSCH according to another embodiment of this application.

In a first case in FIG. 7, the time unit #1 and the time unit #2 are a same time unit, the terminal device adds the feedback information #1 to the GUL PUSCH, and the terminal device uses the G-UCI to instruct the terminal device to send the feedback information #1 in the time unit #1, or indicate that the time unit #1 includes the feedback information #1. After receiving and demodulating the G-UCI, the network device may demodulate the feedback information #1, and determine a physical resource 1 corresponding to data information in the time unit #1. A physical resource corresponding to the data information may include a physical resource occupied by the data information and/or a TBS of the data information. For example, the physical resource 1 occupied by the uplink data information is a physical resource, in the PUSCH, other than a physical resource occupied by the G-UCI and the feedback information #1, so that a TB corresponding to the UL-SCH is demodulated.

In a second case in FIG. 7, the terminal device does not carry the feedback information #1 in the GUL PUSCH. The terminal device uses the G-UCI to indicate that the terminal device does not send the feedback information #1 in the time unit (namely, the time unit #2) in which the G-UCI is located, or the time unit #2 does not include the feedback information #1. After receiving and demodulating the G-UCI, the network device may determine a physical resource 2 corresponding to data information in the time unit. For example, the physical resource 2 occupied by the uplink data information is a physical resource, in the PUSCH, other than a physical resource occupied by the G-UCI, so that a TB corresponding to the UL-SCH is demodulated.

### Indication manner 2

When the time unit #1 and the time unit #2 are not a same time unit, the G-UCI may instruct the terminal device to send the feedback information #1 in the GUL uplink burst.

Specifically, the terminal device may explicitly indicate the existence of the feedback information #1 by using the G-UCI, or implicitly indicate the existence of the feedback information #1 by using the G-UCI. Specific manners are the same as those in the indication manner 1. For brevity, details are not described herein again.

It should be understood that the terminal device may indicate only the existence of the feedback information #1 in the GUL uplink burst, or may indicate both the existence of the feedback information #1 in the GUL uplink burst and the time domain location of the time unit #1 in the GUL uplink burst. A manner of indicating the time domain location of the time unit #1 in the GUL uplink burst is the same as that described above, and details are not described herein again.

When the G-UCI may further jointly indicate the existence and the time domain location of the feedback information #1, a bit field in the G-UCI may be specifically used. An indication state indicates that the uplink burst does not carry the feedback information #1, and any one of remaining indication states indicates that the uplink burst carries the feedback information #1, and also indicates the time domain location of the feedback information #1 in the GUL uplink burst (for example, a time unit in which the feedback information #1 is located in the GUL uplink burst). For example, when an uplink burst length is seven subframes, 3-bit indication information is used. One indication state indicates that the feedback information #1 is not carried in the uplink burst, and the other seven indication states respectively indicate that the feedback information #1 is carried in the first subframe to the seventh subframe in the uplink burst.

In addition, the network device may also determine the time unit #1 in a blind detection manner. Specifically, to enable the network device to identify the terminal device, UE ID information may be added to the feedback information #1, so that the network device identifies, by using the UE ID, UE that sends the feedback information #1. More specifically, in a process of encoding the feedback information #1, the terminal device scrambles, by using a user identity UE ID, a cyclic redundancy check CRC code included in the feedback information #1. The terminal device may encode valid information in the feedback information #1 to ensure transmission reliability of the feedback information #1. To check the decoded valid information, a CRC bit, such as a 16-bit CRC bit sequence, may be added to the valid information in the feedback information #1, so that the CRC is encoded together with the valid information in the feedback information #1. In a conventional LTE system, the network device instructs or triggers the terminal device to send all the feedback information #1 carried in an (e)PUCCH or a PUSCH. Therefore, an encoding-based CRC bit sequence of the feedback information #1 is predefined. However, during GUL PUSCH transmission, a same GUL radio resource may be allocated to a plurality of terminal devices, and therefore sending may be performed at the same time, and collision may occur. To enable the network device to distinguish a terminal device that sends the feedback information #1, the CRC bit in the feedback information #1 may be scrambled by using a UE ID (for example, a user-specific C-RNTI), so as to assist the network device in identifying the terminal device.

In this way, the G-UCI is used to instruct the terminal device to send the first feedback information, so that the network device can learn of the existence of the first feedback information in time, and the complexity of blind detection of the network device is reduced. In addition, when the first feedback information and the uplink data are multiplexed in a same time unit through rate matching, the network device can correctly demodulate the first feedback information and the uplink data that are carried in the same time unit, thereby improving uplink transmission efficiency.

Optionally, the G-UCI is further used to indicate a transport format of the first feedback information.

Specifically, a transport format of the feedback information #1 includes at least one of the following:
(1) a quantity of bits corresponding to the feedback information #1, or a downlink carrier set corresponding to the feedback information #1;
(2) a modulation and coding scheme MCS corresponding to the feedback information #1; and
(3) a feedback information type included in the feedback information #1.

Correspondingly, the network device may determine the transport format of the feedback information #1 based on the G-UCI, and then receive the feedback information #1 based on the transport format of the feedback information #1. Here, the feedback information type included in the feedback information #1 indicates a type of feedback information carried in the feedback information #1. Specifically, the DL HARQ-ACK information is a type of feedback information, and the aCSI is another type of feedback information. For example, the feedback information #1 may include only the DL HARQ-ACK information, or may include only the aCSI, or may include both the DL HARQ-ACK and the aCSI. The foregoing three cases are corresponding to different quantities of bits. Therefore, the network device and the terminal device need to have consistent understanding of a case that is used in the foregoing three cases. Therefore, in this embodiment of this application, the transport format in the feedback information #1 sent by the terminal device may be indicated by using the G-UCI.

Specifically, for the feedback information type included in the feedback information #1, the terminal device may indicate, in the G-UCI, that the feedback information #1 "carries only the DL HARQ-ACK", "carries only the aCSI", or "carries both the DL HARQ-ACK and the aCSI", so that the network device and the terminal device have consistent understanding of the feedback information #1, and further content sent by the terminal device is correctly demodulated.

For the modulation and coding scheme MCS corresponding to the feedback information #1, the terminal device may directly send, to the network device, indication information indicating the MCS corresponding to the feedback information #1, so that the network device determines a physical resource of the feedback information #1 and demodulates the feedback information #1.

For the quantity of bits corresponding to the feedback information #1, the terminal device may directly report the quantity of bits corresponding to the feedback information #1 to the network device. For example, the terminal device may pre-define at least two different bit quantity levels, and the terminal device reports the bit quantity levels, so that the network device determines the quantity of bits corresponding to the feedback information #1.

For the downlink carrier set corresponding to the feedback information #1, the terminal device may report the downlink carrier set corresponding to the feedback information #1 to the network device. Specifically, the downlink carrier set corresponding to the feedback information #1 is a downlink carrier or downlink carriers of downlink transmission for which the terminal device feeds back the feedback information #1. For example, a quantity of bits of the DL HARQ-ACK or the aCSI that is fed back for each downlink carrier is predefined or configured by an upper layer, and the terminal device reports the downlink carrier set corresponding to the feedback information #1, so that the network device can determine the quantity of bits corresponding to the feedback information #1 after determining the downlink carrier set corresponding to the feedback information #1.

It should be understood that, for reporting the quantity of bits of the UCI, when the feedback information #1 includes only the DL HARQ-ACK, the terminal device reports a quantity of bits of the DL HARQ-ACK; when the feedback information #1 includes only the aCSI, the terminal device reports a quantity of bits of the aCSI; or when the feedback information #1 includes both the DL HARQ-ACK and the aCSI, the quantity of bits reported by the terminal device may be quantities of bits respectively corresponding to the DL HARQ-ACK and the aCSI, or may be a total quantity of bits of the DL HARQ-ACK and the CSI.

It should be further understood that, for reporting the downlink carrier set corresponding to the feedback information #1, when the feedback information #1 includes only the DL HARQ-ACK, the terminal device reports a downlink carrier set corresponding to the DL HARQ-ACK; when the feedback information #1 includes only the aCSI, the terminal device reports a downlink carrier set corresponding to the aCSI; or when the feedback information #1 includes both the DL HARQ-ACK and the aCSI, the terminal device may separately report a downlink carrier set corresponding to the DL HARQ-ACK and a downlink carrier set corresponding to the aCSI, or may report only a downlink carrier set corresponding to the DL HARQ-ACK or only a downlink carrier set corresponding to the aCSI.

In this way, the transport format of the first feedback information is indicated by using the G-UCI, so that the network device can correctly receive the first feedback information by using the transport format of the first feedback information, and can also effectively determine the physical resource of the uplink data that occupies a time unit the same as that of the first feedback information, so as to demodulate the uplink data.

As an example instead of a limitation, the transport format of the feedback information #1 may be not only indicated by the G-UCI, but also indicated in a manner configured by higher layer signaling or predefined. This is not limited in this embodiment of this application.

It should be noted that when the transport format of the feedback information #1 may be predefined or configured by the higher layer signaling, the terminal device may report the existence of the feedback information #1, so as to facilitate detection of the network device; or may not report the existence of the feedback information #1, so that the network device determines the existence and content of the feedback information #1 through blind detection. If the transport format of the feedback information #1 is semi-statically configured or predefined, the complexity of blind detection of the network device is low. Therefore, the network device can determine the existence of the feedback information #1 through blind detection.

It should be further noted that for transport format information included in the feedback information #1, such as the feedback information type, the quantity of bits/the downlink carrier set, the MCS, one part may be reported by the terminal device by using the G-UCI, while the other part is pre-defined or configured by a higher layer. For example, the terminal device may report the feedback information type included in the feedback information #1 by using the G-UCI, and the quantity of bits and the MCS of the feedback information #1 are pre-defined or configured by the higher level.

The foregoing describes the time sequence relationship between the time unit #1 and the time unit #2 in this embodiment of this application (that is, the case A), and a relationship between the corresponding feedback information #1 and the G-UCI. The following describes in detail a time sequence relationship between the time unit #1 and a time unit corresponding to downlink transmission (that is, the case B).

It should be understood that the case B may also be combined with any embodiment in the case A, in other words, the time unit #1 may be determined based on either the G-UCI or the time unit corresponding to the downlink transmission.

### Case B

### Case B1

Optionally, when the first feedback information includes downlink hybrid automatic repeat request acknowledgement DL HARQ-ACK information for first downlink data, a time sequence relationship between the first time unit and a third time unit is predefined, or a time sequence relationship between the first time unit and a third time unit is configured or indicated by the network device, and the third time unit is a time unit in which the network device sends the first downlink data.

When the feedback information #1 includes the DL HARQ-ACK information for the first downlink data, a time sequence relationship between the time unit #1 and the time unit #3 (an example of the third time unit) may be understood as follows: the DL HARQ-ACK information is sent only in an uplink time unit corresponding to PDSCH HARQ timing (HARQ timing), but is not entirely determined by the terminal device autonomously, or in other words, is jointly determined by the terminal device and the network device.

In addition, the time sequence relationship between the time unit #1 and the time unit #3 may be predefined, or may be semi-statically configured by the network device for the terminal device, or may be dynamically notified by the network device to the terminal device by using signaling. This is not limited in this embodiment of this application.

It should be understood that when the feedback information #1 includes the DL HARQ-ACK information, the terminal device may be limited to send the DL HARQ-ACK information in the time unit #1 only when detecting that the network device schedules downlink data of the terminal device, and the terminal device does not autonomously send the DL HARQ-ACK information when the network device does not schedule the downlink data of the terminal device, thereby reducing the complexity of blind detection of the network device. In addition, a problem of a relatively large quantity of overheads may be avoided when the terminal device excessively frequently sends the DL HARQ-ACK information. For example, if the network device does not send a PDSCH for a terminal device, the network device does not need to blindly detect the feedback information #1 in the GUL PUSCH.

It should be understood that, according to the HARQ timing, when the DL HARQ-ACK information fed back for downlink data in the time unit #3 collides with sending in the time unit #1 in the GUL uplink burst, the terminal device does not send the DL HARQ-ACK in an uplink control channel, but adds the DL HARQ-ACK to a GUL PUSCH (to be specific, a GUL radio resource corresponding to the time unit #1).

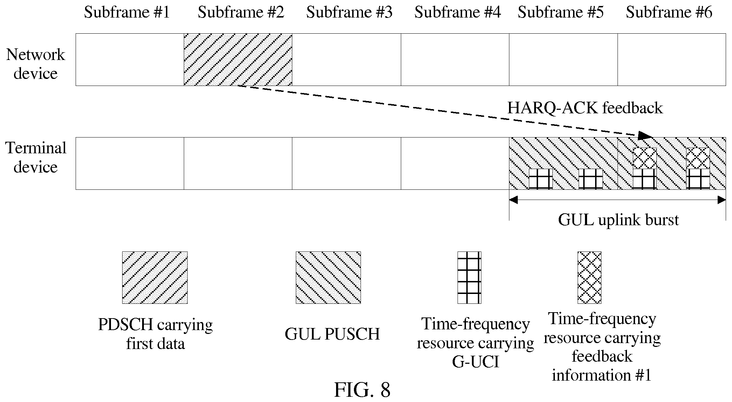

FIG. 8 is a schematic diagram of the time sequence relationship between the time unit #1 and the time unit #3 according to this embodiment of this application. As shown in FIG. 8, assuming that a length of a time unit is 1 ms, namely, one subframe, the network device sends the first downlink data to the terminal device in a subframe #2 (namely, the time unit #3), and a predefined feedback delay of the DL HARQ-ACK information is 4 ms (to be specific, a predefined time sequence relationship), the terminal device should send the DL HARQ-ACK information in a subframe #6. During uplink transmission, when the terminal device occupies a subframe #5 and the subframe #6 to send the GUL uplink data information, for the subframe #5, the network device does not send downlink data to the terminal device in a subframe #1, and therefore, the terminal device does not need to carry the DL HARQ-ACK information in the subframe #5. For the subframe #6, the terminal device further sends the DL HARQ-ACK information in the subframe #6, and therefore, the terminal device may carry the DL HARQ-ACK information in a GUL PUSCH of the subframe #6 (instead of sending a PUCCH in the subframe #6), and report the existence of the DL HARQ-ACK information by using the G-UCI for detection by the network device. For the subframe #5, the network device does not send the downlink data to the terminal device in the subframe #1, and therefore, the terminal device does not need to carry the DL HARQ-ACK information in the subframe #5.

It should be understood that the DL HARQ-ACK information in the feedback information #1 may be not only for the first downlink data, but also for a plurality of pieces of downlink data (or may be understood as a plurality of downlink transport blocks), or may be for downlink data in a plurality of downlink time units including the third time unit. In other words, a plurality of uplink feedbacks corresponding to a plurality of pieces of downlink data (or downlink data in a plurality of downlink time units including the third time unit) are carried in one piece of DL HARQ-ACK information. This is not limited in this embodiment of this application.

In this way, the first time unit is associated with the third time unit in which the downlink data that is based on scheduling performed by the network device is located. This can reduce complexity of blind detection of the network device when the terminal device does not notify the network device of the existence of the first feedback information and the transport format of the first feedback information.

In this embodiment of this application, when both the uplink data and the DL HARQ-ACK information for the first downlink data are carried in a time unit in the GUL uplink burst, to reduce impact on transmission performance of uplink data caused by a puncturing manner, optionally, the feedback information #1 and uplink data carried in the time unit #1 are multiplexed in the first time unit #1 through rate matching.

In other words, when the terminal device sends the uplink data and the feedback information #1 in the GUL PUSCH of the time unit #1, the feedback information #1 and the uplink data occupy orthogonal physical resources in the time unit #1, and during physical resource mapping in the time unit #1, the uplink data may not be mapped to a physical resource occupied by the feedback information #1.

In addition, when the feedback information #1 includes the aCSI and the DL HARQ-ACK information, after jointly encoding the aCSI and the DL HARQ-ACK information, the terminal device may multiplex, through rate matching, the uplink data and a code block obtained after joint encoding; or may independently encode the aCSI and the DL HARQ-ACK information, and then multiplex, through rate matching, the uplink data and code blocks obtained after independent encoding.

It should be understood that the time sequence relationship between the time unit #1 and the time unit #3 applies to not only a Multefire system in an unlicensed spectrum, but also a URLLC system in a licensed spectrum. For the licensed spectrum, compared with a conventional LTE system in which a puncturing manner is used for the DL HARQ-ACK information, in this application, the DL HARQ-ACK information and the uplink data are multiplexed through rate matching, effectively improving uplink data transmission reliability.

### Case B2

Before the terminal device sends the first feedback information in the first time unit, the method further includes:
receiving, by the terminal device, first trigger information sent by the network device, where the first trigger information is used to trigger the terminal device to carry the first feedback information in a fourth time unit, and the fourth time unit belongs to the at least one time unit.

That the terminal device sends, in the first time unit in the at least one time unit, the first feedback information for the downlink transmission includes:
sending, by the terminal device, the first feedback information in the first time unit based on the first trigger information.

Specifically, before the terminal device sends the feedback information #1, the network device sends, to the terminal device, trigger information #1 (an example of the first trigger information) that is used to trigger the terminal device to carry the feedback information #1 in a time unit #4 (an example of the fourth time unit). Further, the terminal device may send the feedback information #1 according to the trigger information #1, to be specific, if the time unit #4 belongs to the GUL uplink burst (namely, the at least one time unit), or the time unit #4 falls within a time range occupied by the GUL uplink burst, the terminal device may carry the feedback information #1 in a GUL PUSCH in the GUL uplink burst, instead of adding the feedback information #1 to a channel that is based on scheduling or triggering by the network device.

Optionally, the network device triggers the feedback information #1 to be carried in the time unit #4, and triggers the terminal device to carry the feedback information #1 in a PUCCH, an ePUCCH, or an sPUCCH corresponding to the time unit #4. When the time unit #4 belongs to a time range occupied by the GUL uplink burst, the terminal device may carry the feedback information #1 in a GUL PUSCH (to be specific, a GUL radio resource corresponding to the time unit #1) in the GUL uplink burst.

As an example instead of a limitation, the trigger information #1 may be control information in a PDCCH. For example, the network device may trigger the feedback information #1 to be carried in the time unit #4 by using the control information in the PDCCH, such as a DL grant, a UL grant, or a common PDCCH (Common PDCCH, CPDCCH).

Optionally, the network device triggers the feedback information #1 to be carried in the time unit #4, and the time unit #4 corresponds to a PUSCH. In other words, the network device may schedule the terminal device to send a PUSCH (to be specific, a corresponding scheduled PUSCH resource), and instruct the feedback information #1 to be carried in the PUSCH corresponding to the time unit #4. When the time unit #4 belongs to the time range occupied by the GUL uplink burst, the terminal device may not use the PUSCH (to be specific, the PUSCH corresponding to the time unit #4) resource scheduled by the network device, but still use a GUL PUSCH resource to send uplink data, and add, to a GUL PUSCH (to be specific, the GUL radio resource corresponding to the time unit #1) in the GUL uplink burst, the feedback information #1 that is originally carried in the PUSCH (to be specific, the corresponding scheduled PUSCH resource) corresponding to the time unit #4.

It should be noted that a GUL PUSCH that is finally determined by the terminal device and that carries the feedback information #1 is the PUSCH corresponding to the time unit #1.

In addition, the time unit #1 and the time unit #4 may be a same time unit or may not be a same time unit.

For example, if the time unit #4 belongs to the at least one time unit, and there is exactly the uplink data that the terminal device needs to send in the time unit #4, the time unit #1 and the time unit #4 are a same time unit.

For another example, if the time unit #4 belongs to the at least one time unit, but no uplink data is sent in the time unit #4, or a relatively large amount of other uplink control information (such as G-UCI) is already carried in the time unit #4, the time unit #1 and the time unit #4 are not a same time unit.

In this way, the first time unit is associated with the fourth time unit that is based on scheduling performed by the network device. This can reduce the complexity of blind detection of the network device when the terminal device does not notify the network device of the existence of the first feedback information and the transport format of the first feedback information.

### Case B3

Before the terminal device sends the first feedback information in the first time unit, the method further includes:
receiving, by the terminal device, second trigger information sent by the network device in a fifth time unit, where the second trigger information is used to trigger the terminal device to send second feedback information in a sixth time unit, a time domain location of the sixth time unit is before the time domain location of the first time unit, and an information type of the first feedback information is at least partially the same as an information type of the second feedback information; and
that the terminal device sends, in the first time unit in the at least one time unit, the first feedback information for the downlink transmission includes:
   when the terminal device fails to send the second feedback information, sending, by the terminal device, the first feedback information in the first time unit.

Specifically, before the terminal device sends the feedback information #1, the network device sends, to the terminal device in a time unit #5 (an example of the fifth time unit), trigger information #2 (an example of the second feedback information) that is used to trigger the terminal device to carry feedback information #2 (an example of the second feedback information) in a time unit #6 (an example of the sixth time unit). Further, the terminal device may send the feedback information #1 based on the trigger information #2. More specifically, when the terminal device fails to send the feedback information #2, the terminal device sends the feedback information #1 in the time unit #1.

That "the terminal device fails to send the second feedback information" may indicate a channel preemption failure caused by a failure of LBT performed by the terminal device before the time unit #6, so that the terminal device cannot occupy the time unit #6 to send the feedback information #2.

In addition, the network device triggers the terminal device to send the feedback information #2 in the time unit #6. The network device may trigger the terminal device to carry the feedback information #2 in a PUSCH (a scheduled PUSCH resource) of the time unit #6, or may trigger the terminal device to carry the feedback information #2 in an uplink control channel (for example, a PUCCH, an ePUCCH, or an sPUCCH) of the time unit #6. Specifically, after the terminal device receives the trigger information #2 that triggers the terminal device to carry the feedback information #2 in the uplink control channel or the scheduled PUSCH, if the terminal device fails to send the feedback information #2, the terminal device sends the feedback information #1 in a GUL PUSCH (to be specific, a GUL radio resource corresponding to the time unit #1).

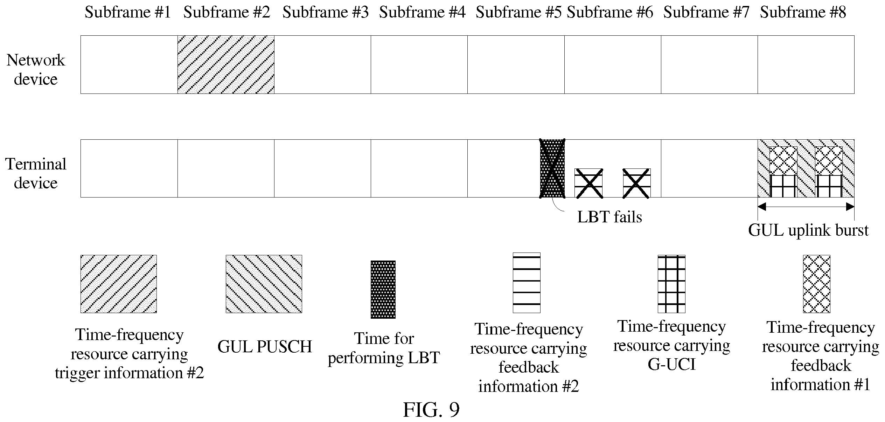

FIG. 9 is a schematic diagram of the time sequence relationship between the time unit #1, the time unit #5, and the time unit #6 according to this embodiment of this application. As shown in FIG. 9, a subframe #8 is a GUL subframe, and the network device sends the trigger information #2 in a subframe #2 (namely, the time unit #5) to trigger the terminal device to send the DL HARQ-ACK information in a subframe #6 (namely, the time unit #6). After receiving the trigger information #2, the terminal device needs to listen on a channel before the subframe #6, that is, performs LBT. However, the terminal device fails to preempt the subframe #6 due to an LBT failure, and then the terminal device needs to continue to preempt the channel and successfully preempt the channel before the subframe #8 (namely, the time unit #1). When uplink data needs to be sent in the subframe #8, the terminal device may send the GUL PUSCH and the DL HARQ-ACK information in the subframe #8. In other words, the DL HARQ-ACK information is used as the feedback information #1 to be carried in the GUL PUSCH of the subframe #8, so that the network device can obtain the DL HARQ-ACK information in time.

That "an information type of the feedback information #1 is at least partially the same as an information type of the feedback information #2" indicates that the information type of the feedback information #1 may be partially or completely the same as the information type of the feedback information #2.

The information type of the feedback information #1 may be partially the same as the information type of the feedback information #2, and details are as follows:

For example, the feedback information #2 includes the aCSI, and the feedback information #1 includes the DL HARQ-ACK information and the aCSI.

For another example, the feedback information #2 includes the DL HARQ-ACK information, and the feedback information #1 includes the DL HARQ-ACK information and the aCSI.

For another example, the feedback information #2 includes the DL HARQ-ACK information and the aCSI, and the feedback information #1 includes the DL HARQ-ACK information.

For another example, the feedback information #2 includes the DL HARQ-ACK information and the aCSI, and the feedback information #1 includes the aCSI.

The information type of the feedback information #1 may be completely the same as the information type of the feedback information #2, and details are as follows:

For example, the feedback information #2 includes the aCSI, and the feedback information #1 also includes the aCSI.

For another example, the feedback information #2 includes the DL HARQ-ACK information, and the feedback information #1 also includes the DL HARQ-ACK information.

For another example, the feedback information #2 includes the DL HARQ-ACK information and the aCSI, and the feedback information #1 also includes the DL HARQ-ACK information and the aCSI.

In addition, although the information type of the feedback information #1 is at least partially the same as the information type of the feedback information #2, content of the two pieces of feedback information may be the same or different.

For example, when the feedback information #1 and the feedback information #2 are of a same information type: the aCSI, content of the aCSI included in the feedback information #1 may be the same as or different from content of the aCSI included in the feedback information #2 because a channel state constantly changes.

For another example, when the feedback information #1 and the feedback information #2 are of a same information type: the DL HARQ-ACK information, the DL HARQ-ACK information is for at least one piece of same downlink data, and therefore, useful content of the DL HARQ-ACK information included in the feedback information #1 is the same as useful content of the DL HARQ-ACK information included in the feedback information #2, to be specific, a receiving status indicated by the DL HARQ-ACK information in the feedback information #1 is the same as a receiving status indicated by the DL HARQ-ACK information in the feedback information #2.

Optionally, information content of the feedback information #1 includes information content of the feedback information #2.

In other words, content of a type of information carried in the feedback information #1 includes content of the same type of information carried in the feedback information #2.

Optionally, content of a type of information carried in the feedback information #1 is the same as content of the same type of information carried in the feedback information #2.

For example, when both the feedback information #1 and the feedback information #2 include DL HARQ-ACK information for same downlink data, a receiving status indicated by the DL HARQ-ACK information in the feedback information #1 is the same as a receiving status indicated by the DL HARQ-ACK information in the feedback information #2.

Optionally, content of a type of information carried in the feedback information #1 includes content of the same type of information carried in the feedback information #2, and further includes new content.

For example, both the feedback information #1 and the feedback information #2 include the DL HARQ-ACK information, and the feedback information #2 needs to report a receiving status corresponding to a HARQ process #1. Before sending the feedback information #1, the terminal device demodulates a new PDSCH corresponding to a HARQ process #2. Therefore, the DL HARQ-ACK information in the feedback information #1 includes a receiving status of the HARQ process #2 in addition to the receiving status of the HARQ process #1.

It should be understood that if the network device, a base station, triggers, a long time ago, the terminal device to send the UCI, the UCI information may be overdue. In this case, the UCI carried in the GUL PUSCH also loses time validity. Therefore, a sending occasion of the UCI can be further limited, and time validity of the feedback information #1 can be improved.

In this way, the first time unit is associated with the fifth time unit and the sixth time unit that are based on scheduling performed by the network device. This can reduce complexity of blind detection of the network device when the terminal device does not notify the network device of the existence of the first feedback information and the transport format of the first feedback information.

Optionally, the fifth time unit is a time unit in which the terminal device receives latest trigger information before the first time unit.

Specifically, in a specific period of time, the network device may send a plurality of pieces of trigger information to the terminal device. The trigger information #2 may be latest trigger information sent by the network device before the time unit #1, to be specific, the time unit #5 is a time unit in which the terminal device receives the latest trigger information before the time unit #1.

Each of the plurality of pieces of trigger information is used to trigger the terminal device to send feedback information that includes at least one of DL HARQ-ACK and aCSI. Further, similar to the feedback information #2, an information type of each of the plurality of pieces of trigger information is at least partially the same as the information type of the feedback information #1.

In this way, the fifth time unit is a time unit in which the terminal device receives the latest trigger information before the first time unit, effectively improving time validity of the first feedback information.

Optionally, duration of an interval between the fifth time unit and the first time unit is less than first preset duration, or duration of an interval between the sixth time unit and the first time unit is less than second preset duration.

Therefore, according to the information transmission method provided in this embodiment of this application, the terminal device can send the first feedback information for the downlink transmission on the GUL radio resource allocated by the network device, to be specific, carry the first feedback information in a GUL PUSCH without waiting for a PUSCH or an (e)PUCCH scheduled or triggered by next downlink transmission, thereby reducing a delay of the first feedback information and improving the downlink transmission adaptation precision.

In addition, by using the time sequence relationship between the first time unit and the second time unit, the network device can determine the first time unit based on the G-UCI. In addition, the network device always needs to detect the G-UCI, and therefore, the complexity of blind detection of the network device is also reduced.

In addition, the first feedback information and the G-UCI are independently encoded, so that information related to the first feedback information can be put in the G-UCI, and the network device can obtain the first feedback information based on the information related to the first feedback information after obtaining the G-UCI, thereby effectively reducing complexity of blind detection.

In addition, the first time unit is determined by using the predefined time sequence relationship between the first time unit and the second time unit, so that the terminal device does not need to send signaling to notify the time domain location of the first time unit. In this way, signaling overheads are effectively reduced, and the complexity of blind detection of the network device is also reduced.

In addition, the time domain location of the first time unit in the at least one time unit is indicated by using the G-UCI, effectively reducing the complexity of blind detection of the network device, and the time domain location is dynamically indicated by using the G-UCI, improving system flexibility.

In addition, the G-UCI instructs the terminal device to send the first feedback information, so that the network device can learn of the existence of the first feedback information in time, and the complexity of blind detection of the network device is reduced. In addition, when the first feedback information and the uplink data are multiplexed in a same time unit through rate matching, the network device can correctly demodulate the first feedback information and the uplink data that are carried in the same time unit, thereby improving uplink transmission efficiency.

In addition, the transport format of the first feedback information is indicated by using the G-UCI, so that the network device can correctly receive the first feedback information by using the transport format of the first feedback information, and can also effectively determine a physical resource of the uplink data that occupies a time unit the same as that of the first feedback information, so as to demodulate the uplink data.

In addition, the first time unit is located in the last time unit or the penultimate time unit in the at least one time unit, so that the first time unit can carry feedback information #1 corresponding to a relatively large amount of different downlink data, thereby effectively reducing a feedback delay.

In addition, the first time unit is associated with the third, the fourth, the fifth, or the sixth time unit that is based on scheduling performed by the network device. This can reduce the complexity of blind detection of the network device when the terminal device does not notify the network device of the existence of the first feedback information and the transport format of the first feedback information.

In addition, the fifth time unit is a time unit in which the terminal device receives the latest trigger information before the first time unit, effectively improving the time validity of the first feedback information.

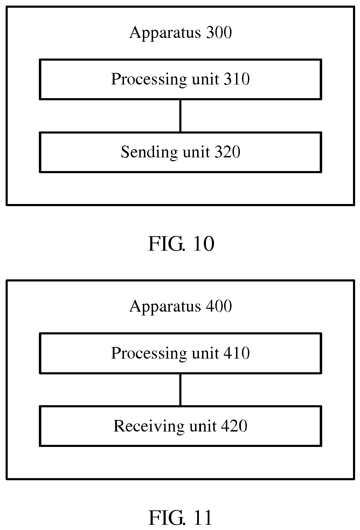

The information transmission method according to the embodiments of this application is described above with reference to FIG. 1 and FIG. 9, and an information transmission apparatus according to the embodiments of this application is described below with reference to FIG. 10 and FIG. 11. Technical features described in the method embodiment are also applicable to the following apparatus embodiments.

FIG. 10 is a schematic block diagram of an information transmission apparatus 300 according to an embodiment of this application. As shown in FIG. 10, the apparatus 300 includes:
a processing unit 310, configured to determine a grant-free uplink GUL radio resource, where the GUL radio resource is used by the apparatus to send uplink data, and the GUL radio resource includes at least one time unit; and
a sending unit 320, configured to send, in a first time unit in the at least one time unit determined by the processing unit, first feedback information for downlink transmission.

Optionally, the first time unit and a second time unit in the at least one time unit are a same time unit, or a time domain location of the first time unit is after a time domain location of the second time unit in the at least one time unit, the second time unit is a time unit in which the apparatus sends grant-free uplink control information G-UCI, and the G-UCI includes scheduling information for uplink transmission.

Optionally, when the first time unit and the second time unit are the same time unit, the first feedback information and the G-UCI are independently encoded.

Optionally, when the time domain location of the first time unit is after the time domain location of the second time unit, a time sequence relationship between the first time unit and the second time unit is predefined.

Optionally, the G-UCI is further used to indicate the time domain location of the first time unit in the at least one time unit.

Optionally, the G-UCI is further used to instruct the apparatus to send the first feedback information.

Optionally, the G-UCI is further used to indicate a transport format of the first feedback information.

Optionally, the first time unit is a last time unit or a penultimate time unit in the at least one time unit.

Optionally, when the first feedback information includes downlink hybrid automatic repeat request acknowledgement DL HARQ-ACK information for first downlink data, a time sequence relationship between the first time unit and a third time unit is predefined, or a time sequence relationship between the first time unit and a third time unit is configured or indicated by the network device, and the third time unit is a time unit in which the network device sends the first downlink data.

Optionally, the apparatus 300 further includes:
a receiving unit 330, configured to receive first trigger information sent by the network device, where the first trigger information is used to trigger the apparatus to carry the first feedback information in a fourth time unit, and the fourth time unit belongs to the at least one time unit; and
the sending unit 320 is specifically configured to:
   send the first feedback information in the first time unit based on the first trigger information.

Optionally, the receiving unit 330 is further configured to:
receive second trigger information sent by the network device in a fifth time unit, where the second trigger information is used to trigger the apparatus to send second feedback information in a sixth time unit, a time domain location of the sixth time unit is before the time domain location of the first time unit, and an information type of the first feedback information is at least partially the same as an information type of the second feedback information; and
the sending unit 320 is specifically configured to:
   when the sending unit fails to send the second feedback information, send the first feedback information in the first time unit.

Optionally, the fifth time unit is a time unit in which the apparatus receives latest trigger information before the first time unit.

Optionally, the first feedback information includes at least one of aperiodic channel state information aCSI and downlink hybrid automatic repeat request acknowledgement DL HARQ-ACK information.

The information transmission apparatus 300 may be corresponding to the terminal device described in the method 200 (for example, may be configured as the terminal device or may be the terminal device), and modules or units in the information transmission apparatus 300 are separately used to perform actions or processing processes performed by the terminal device in the method 200. To avoid repetition, details are not described herein.

In this embodiment of this application, the apparatus 300 may include a processor and a transceiver. The processor is in communication connection with the transceiver. Optionally, the apparatus further includes a memory, and the memory is in communication connection with the processor. Optionally, the processor, the memory, and the transceiver may be in communication connection with each other, the memory may be configured to store an instruction, and the processor is configured to execute the instruction stored in the memory, to control the transceiver to send information or a signal.

The processing unit 310 in the apparatus 300 shown in FIG. 10 may correspond to the processor, and the sending unit 320 in the apparatus 300 shown in FIG. 10 may correspond to the transceiver.

It should be noted that the method embodiments in the embodiments of this application may be applied to a processor, or be implemented by a processor. The processor may be an integrated circuit chip and has a signal processing capability. In an implementation process, steps in the foregoing method embodiments can be implemented by using a hardware integrated logical circuit in the processor, or by using instructions in a form of software. The processor may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logical device, a discrete gate or transistor logic device, or a discrete hardware component. The processor may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor.

It may be understood that the memory in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchlink dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus dynamic random access memory (Direct Rambus RAM, DR RAM). It should be noted that the memory of the systems and methods described in this specification includes but is not limited to these and any memory of another proper type.

FIG. 11 is a schematic block diagram of an information transmission apparatus 400 according to an embodiment of this application. As shown in FIG. 11, the apparatus 400 includes:
a processing unit 410, configured to allocate a grant-free uplink GUL radio resource to a terminal device, where the GUL radio resource is used by the terminal device to send uplink data, and the GUL radio resource includes at least one time unit; and
a receiving unit 420, configured to receive first feedback information sent by the terminal device for downlink data, where the first feedback information is carried in a first time unit in the at least one time unit.

Optionally, the first time unit and a second time unit in the at least one time unit are a same time unit, or a time domain location of the first time unit is after a time domain location of the second time unit in the at least one time unit, the second time unit is a time unit in which the terminal device sends grant-free uplink control information G-UCI, and the G-UCI includes scheduling information for uplink transmission.

Optionally, when the first time unit and the second time unit are the same time unit, the first feedback information and the G-UCI are independently encoded.

Optionally, when the time domain location of the first time unit is after the time domain location of the second time unit, a time sequence relationship between the first time unit and the second time unit is predefined.

Optionally, the G-UCI is further used to indicate the time domain location of the first time unit in the at least one time unit; and
the receiving unit 420 is specifically configured to:
receive the G-UCI;
determine the time domain location of the first time unit based on the G-UCI; and
receive the first feedback information based on the time domain location of the first time unit.

Optionally, the G-UCI is further used to instruct the terminal device to send the first feedback information; and the receiving unit 320 is specifically configured to:
receive the G-UCI; and
receive the first feedback information based on the G-UCI.

Optionally, the G-UCI is further used to indicate a transport format of the first feedback information; and
the receiving unit 320 is specifically configured to:
receive the G-UCI;
determine the transport format of the first feedback information based on the G-UCI; and
receive the first feedback information based on the transport format of the first feedback information.

Optionally, the first time unit is a last time unit or a penultimate time unit in the at least one time unit.

Optionally, when the first feedback information includes downlink hybrid automatic repeat request acknowledgement DL HARQ-ACK information for first downlink data, a time sequence relationship between the first time unit and a third time unit is predefined, or a time sequence relationship between the first time unit and a third time unit is configured or indicated by the apparatus, and the third time unit is a time unit in which the apparatus sends the first downlink data.

Optionally, the apparatus further includes:
a sending unit 430, configured to send first trigger information to the terminal device, where the first trigger information is used to trigger the terminal device to carry the first feedback information in a fourth time unit, and the fourth time unit belongs to the at least one time unit.

Optionally, the sending unit 430 is further configured to:
send second trigger information to the terminal device in a fifth time unit, where the second trigger information is used to trigger the terminal device to send second feedback information in a sixth time unit, a time domain location of the sixth time unit is before the time domain location of the first time unit, and an information type of the first feedback information is at least partially the same as an information type of the second feedback information.

Optionally, the fifth time unit is a time unit in which the apparatus sends latest trigger information before the first time unit.

Optionally, the first feedback information includes at least one of aperiodic channel state information aCSI and downlink hybrid automatic repeat request acknowledgement DL HARQ-ACK information.

The information transmission apparatus 400 may be corresponding to the network device described in the method 200 (for example, may be configured as the network device or may be the network device), and modules or units in the information transmission apparatus 400 are separately used to perform actions or processing processes performed by the network device in the method 200. To avoid repetition, details are not described herein.

In this embodiment of this application, the apparatus 400 may include a processor and a transceiver. The processor is connected to the transceiver. Optionally, the apparatus further includes a memory, and the memory is in communication connection with the processor. The processor, the memory, and the transceiver may be in communication connection with each other, the memory may be configured to store an instruction, and the processor is configured to execute the instruction stored in the memory, to control the transceiver to send information or a signal.

The processing unit 410 in the apparatus 400 shown in FIG. 11 may correspond to the processor, and the sending unit 420 in the apparatus 400 shown in FIG. 11 may correspond to the transceiver.

It should be noted that the foregoing method embodiments in the embodiments of this application may be applied to a processor, or be implemented by a processor. The processor may be an integrated circuit chip and has a signal processing capability. In an implementation process, steps in the foregoing method embodiments can be implemented by using a hardware integrated logical circuit in the processor, or by using instructions in a form of software. The processor may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logical device, a discrete gate or transistor logic device, or a discrete hardware component. The processor may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor.

It may be understood that the memory in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchlink dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus dynamic random access memory (Direct Rambus RAM, DR RAM). It should be noted that the memory of the systems and methods described in this specification includes but is not limited to these and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present invention, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, wherein the method comprises:
determining, by a terminal device, a grant-free uplink GUL radio resource, wherein the GUL radio resource is used by the terminal device to send uplink data, and the GUL radio resource comprises at least one time unit; and
sending, by the terminal device in a first time unit in the at least one time unit, first feedback information for downlink transmission.

2. The method according to claim 1, wherein the first time unit and a second time unit in the at least one time unit are a same time unit, or a time domain location of the first time unit is after a time domain location of the second time unit in the at least one time unit, the second time unit is a time unit in which the terminal device sends grant-free uplink control information G-UCI, and the G-UCI comprises scheduling information for uplink transmission.

3. The method according to claim 2, wherein when the first time unit and the second time unit are the same time unit, the first feedback information and the G-UCI are independently encoded.

4. The method according to claim 2, wherein when the time domain location of the first time unit is after the time domain location of the second time unit, a time sequence relationship between the first time unit and the second time unit is predefined.

5. The method according to any one of claims 2 to 4, wherein the G-UCI is further used to indicate the time domain location of the first time unit in the at least one time unit.

6. The method according to any one of claims 2 to 5, wherein the G-UCI is further used to instruct the terminal device to send the first feedback information.

7. The method according to any one of claims 2 to 6, wherein the G-UCI is further used to indicate a transport format of the first feedback information.

8. The method according to any one of claims 1 to 3 and 5 to 7, wherein the first time unit is a last time unit or a penultimate time unit in the at least one time unit.

9. The method according to any one of claims 1 to 8, wherein when the first feedback information comprises downlink hybrid automatic repeat request acknowledgement DL HARQ-ACK information for first downlink data, a time sequence relationship between the first time unit and a third time unit is predefined, or a time sequence relationship between the first time unit and a third time unit is configured or indicated by the network device, and the third time unit is a time unit in which the network device sends the first downlink data.

10. The method according to any one of claims 1 to 8, wherein before the sending, by the terminal device, first feedback information in a first time unit, the method further comprises:
receiving, by the terminal device, first trigger information sent by the network device, wherein the first trigger information is used to trigger the terminal device to carry the first feedback information in a fourth time unit, and the fourth time unit belongs to the at least one time unit; and
the sending, by the terminal device in a first time unit in the at least one time unit, first feedback information for downlink transmission comprises:
sending, by the terminal device, the first feedback information in the first time unit based on the first trigger information.

11. The method according to any one of claims 1 to 9, wherein before the sending, by the terminal device, first feedback information in a first time unit, the method further comprises:
receiving, by the terminal device, second trigger information sent by the network device in a fifth time unit, wherein the second trigger information is used to trigger the terminal device to send second feedback information in a sixth time unit, a time domain location of the sixth time unit is before the time domain location of the first time unit, and an information type of the first feedback information is at least partially the same as an information type of the second feedback information; and
the sending, by the terminal device in a first time unit in the at least one time unit, first feedback information for downlink transmission comprises:
when the terminal device fails to send the second feedback information, sending, by the terminal device, the first feedback information in the first time unit.

12. The method according to claim 11, wherein the fifth time unit is a time unit in which the terminal device receives latest trigger information before the first time unit.

13. The method according to any one of claims 1 to 12, wherein the first feedback information comprises at least one of aperiodic channel state information aCSI and downlink hybrid automatic repeat request acknowledgement DL HARQ-ACK information.

14. An information transmission method, wherein the method comprises:
allocating, by a network device, a grant-free uplink GUL radio resource to a terminal device, wherein the GUL radio resource is used by the terminal device to send uplink data, and the GUL radio resource comprises at least one time unit; and
receiving, by the network device, first feedback information sent by the terminal device for downlink data, wherein the first feedback information is carried in a first time unit in the at least one time unit.

15. The method according to claim 14, wherein the first time unit and a second time unit in the at least one time unit are a same time unit, or a time domain location of the first time unit is after a time domain location of the second time unit in the at least one time unit, the second time unit is a time unit in which the terminal device sends grant-free uplink control information G-UCI, and the G-UCI comprises scheduling information for uplink transmission.

16. The method according to claim 15, wherein when the first time unit and the second time unit are the same time unit, the first feedback information and the G-UCI are independently encoded.

17. The method according to claim 15, wherein when the time domain location of the first time unit is after the time domain location of the second time unit, a time sequence relationship between the first time unit and the second time unit is predefined.

18. The method according to any one of claims 15 to 17, wherein the G-UCI is further used to indicate the time domain location of the first time unit in the at least one time unit; and
the receiving, by the network device, first feedback information sent by the terminal device comprises:
receiving, by the network device, the G-UCI;
determining, by the network device, the time domain location of the first time unit based on the G-UCI; and
receiving, by the network device, the first feedback information based on the time domain location of the first time unit.

19. The method according to any one of claims 15 to 18, wherein the G-UCI is further used to instruct the terminal device to send the first feedback information; and
the receiving, by the network device, first feedback information sent by the terminal device comprises:
receiving, by the network device, the G-UCI; and
receiving, by the network device, the first feedback information based on the G-UCI.

20. The method according to any one of claims 15 to 19, wherein the G-UCI is further used to indicate a transport format of the first feedback information; and
the receiving, by the network device, first feedback information sent by the terminal device comprises:
receiving, by the network device, the G-UCI;
determining, by the network device, the transport format of the first feedback information based on the G-UCI; and
receiving, by the network device, the first feedback information based on the transport format of the first feedback information.

21. The method according to any one of claims 14 to 16 and 18 to 20, wherein the first time unit is a last time unit or a penultimate time unit in the at least one time unit.

22. The method according to any one of claims 14 to 21, wherein when the first feedback information comprises downlink hybrid automatic repeat request acknowledgement DL HARQ-ACK information for first downlink data, a time sequence relationship between the first time unit and a third time unit is predefined, or a time sequence relationship between the first time unit and a third time unit is configured or indicated by the network device, and the third time unit is a time unit in which the network device sends the first downlink data.

23. The method according to any one of claims 14 to 21, wherein before the receiving, by the network device, the first feedback information sent by the terminal device, the method further comprises:
sending, by the network device, first trigger information to the terminal device, wherein the first trigger information is used to trigger the terminal device to carry the first feedback information in a fourth time unit, and the fourth time unit belongs to the at least one time unit.

24. The method according to any one of claims 14 to 22, wherein before the receiving, by the network device, the first feedback information sent by the terminal device, the method further comprises:
sending, by the network device, second trigger information to the terminal device in a fifth time unit, wherein the second trigger information is used to trigger the terminal device to send second feedback information in a sixth time unit, a time domain location of the sixth time unit is before the time domain location of the first time unit, and an information type of the first feedback information is at least partially the same as an information type of the second feedback information.

25. The method according to claim 24, wherein the fifth time unit is a time unit in which the network device sends latest trigger information before the first time unit.

26. The method according to any one of claims 14 to 25, wherein the first feedback information comprises at least one of aperiodic channel state information aCSI and downlink hybrid automatic repeat request acknowledgement DL HARQ-ACK information.

27. An information transmission apparatus, wherein the apparatus comprises:
a processing unit, configured to determine a grant-free uplink GUL radio resource, wherein the GUL radio resource is used by the apparatus to send uplink data, and the GUL radio resource comprises at least one time unit; and
a sending unit, configured to send, in a first time unit in the at least one time unit determined by the processing unit, first feedback information for downlink transmission.

28. The apparatus according to claim 27, wherein the first time unit and a second time unit in the at least one time unit are a same time unit, or a time domain location of the first time unit is after a time domain location of the second time unit in the at least one time unit, the second time unit is a time unit in which the apparatus sends grant-free uplink control information G-UCI, and the G-UCI comprises scheduling information for uplink transmission.

29. The apparatus according to claim 28, wherein when the first time unit and the second time unit are the same time unit, the first feedback information and the G-UCI are independently encoded.

30. The apparatus according to claim 28, wherein when the time domain location of the first time unit is after the time domain location of the second time unit, a time sequence relationship between the first time unit and the second time unit is predefined.

31. The apparatus according to any one of claims 28 to 30, wherein the G-UCI is further used to indicate the time domain location of the first time unit in the at least one time unit.

32. The apparatus according to any one of claims 28 to 31, wherein the G-UCI is further used to instruct the apparatus to send the first feedback information.

33. The apparatus according to any one of claims 28 to 32, wherein the G-UCI is further used to indicate a transport format of the first feedback information.

34. The apparatus according to any one of claims 27 to 29 and 31 to 33, wherein the first time unit is a last time unit or a penultimate time unit in the at least one time unit.

35. The apparatus according to any one of claims 27 to 34, wherein when the first feedback information comprises downlink hybrid automatic repeat request acknowledgement DL HARQ-ACK information for first downlink data, a time sequence relationship between the first time unit and a third time unit is predefined, or a time sequence relationship between the first time unit and a third time unit is configured or indicated by the network device, and the third time unit is a time unit in which the network device sends the first downlink data.

36. The apparatus according to any one of claims 27 to 34, wherein the apparatus further comprises:
a receiving unit, configured to receive first trigger information sent by the network device, wherein the first trigger information is used to trigger the apparatus to carry the first feedback information in a fourth time unit, and the fourth time unit belongs to the at least one time unit; and
the sending unit is specifically configured to:
send the first feedback information in the first time unit based on the first trigger information.

37. The apparatus according to any one of claims 27 to 35, wherein the receiving unit is further configured to:
receive second trigger information sent by the network device in a fifth time unit, wherein the second trigger information is used to trigger the apparatus to send second feedback information in a sixth time unit, a time domain location of the sixth time unit is before the time domain location of the first time unit, and an information type of the first feedback information is at least partially the same as an information type of the second feedback information; and
the sending unit is specifically configured to:
when the sending unit fails to send the second feedback information, send the first feedback information in the first time unit.

38. The apparatus according to claim 37, wherein the fifth time unit is a time unit in which the apparatus receives latest trigger information before the first time unit.

39. The apparatus according to any one of claims 27 to 38, wherein the first feedback information comprises at least one of aperiodic channel state information aCSI and downlink hybrid automatic repeat request acknowledgement DL HARQ-ACK information.

40. An information transmission apparatus, wherein the apparatus comprises:
a processing unit, configured to allocate a grant-free uplink GUL radio resource to a terminal device, wherein the GUL radio resource is used by the terminal device to send uplink data, and the GUL radio resource comprises at least one time unit; and
a receiving unit, configured to receive first feedback information sent by the terminal device for downlink data, wherein the first feedback information is carried in a first time unit in the at least one time unit.

41. The apparatus according to claim 40, wherein the first time unit and a second time unit in the at least one time unit are a same time unit, or a time domain location of the first time unit is after a time domain location of the second time unit in the at least one time unit, the second time unit is a time unit in which the terminal device sends grant-free uplink control information G-UCI, and the G-UCI comprises scheduling information for uplink transmission.

42. The apparatus according to claim 41, wherein when the first time unit and the second time unit are the same time unit, the first feedback information and the G-UCI are independently encoded.

43. The apparatus according to claim 41, wherein when the time domain location of the first time unit is after the time domain location of the second time unit, a time sequence relationship between the first time unit and the second time unit is predefined.

44. The apparatus according to any one of claims 41 to 43, wherein the G-UCI is further used to indicate the time domain location of the first time unit in the at least one time unit; and
the receiving unit is specifically configured to:
receive the G-UCI;
determine the time domain location of the first time unit based on the G-UCI; and
receive the first feedback information based on the time domain location of the first time unit.

45. The apparatus according to any one of claims 41 to 44, wherein the G-UCI is further used to instruct the terminal device to send the first feedback information; and
the receiving unit is specifically configured to:
receive the G-UCI; and
receive the first feedback information based on the G-UCI.

46. The apparatus according to any one of claims 41 to 45, wherein the G-UCI is further used to indicate a transport format of the first feedback information; and
the receiving unit is specifically configured to:
receive the G-UCI;
determine the transport format of the first feedback information based on the G-UCI; and
receive the first feedback information based on the transport format of the first feedback information.

47. The apparatus according to any one of claims 40 to 42 and 44 to 46, wherein the first time unit is a last time unit or a penultimate time unit in the at least one time unit.

48. The apparatus according to any one of claims 40 to 47, wherein when the first feedback information comprises downlink hybrid automatic repeat request acknowledgement DL HARQ-ACK information for first downlink data, a time sequence relationship between the first time unit and a third time unit is predefined, or a time sequence relationship between the first time unit and a third time unit is configured or indicated by the apparatus, and the third time unit is a time unit in which the apparatus sends the first downlink data.

49. The apparatus according to any one of claims 40 to 47, wherein the apparatus further comprises:
a sending unit, configured to send first trigger information to the terminal device, wherein the first trigger information is used to trigger the terminal device to carry the first feedback information in a fourth time unit, and the fourth time unit belongs to the at least one time unit.

50. The apparatus according to any one of claims 40 to 48, wherein the sending unit is further configured to:
send second trigger information to the terminal device in a fifth time unit, wherein the second trigger information is used to trigger the terminal device to send second feedback information in a sixth time unit, a time domain location of the sixth time unit is before the time domain location of the first time unit, and an information type of the first feedback information is at least partially the same as an information type of the second feedback information.

51. The apparatus according to claim 50, wherein the fifth time unit is a time unit in which the apparatus sends latest trigger information before the first time unit.

52. The apparatus according to any one of claims 40 to 51, wherein the first feedback information comprises at least one of aperiodic channel state information aCSI and downlink hybrid automatic repeat request acknowledgement DL HARQ-ACK information.
